# EUROPEAN PATENT APPLICATION

(11) **EP 4 579 927 A1**
(43) Date of publication of application: **02.07.2025**
(21) Application number: 22960003.6
(22) Date of filing: 29.09.2022
(51) Int. Cl.: H01M 50/531, H01M 50/536, H01M 50/538, H01M 10/0587, G06F 15/16

(54) **ELECTROCHEMICAL APPARATUS AND ELECTRIC DEVICE**

(71) Applicant: Ningde Amperex Technology Limited, Ningde, Fujian 352100 (CN)
(72) Inventor: LI, Fangfang, Ningde, Fujian 352100 (CN); DAI, Zhifang, Ningde, Fujian 352100 (CN); HU, Xiaoming, Ningde, Fujian 352100 (CN)
(74) Representative: Icosa
(86) International application number: PCT/CN2022/122461
(87) International publication number: WO 2024/065362

(57) **Abstract**

Embodiments of this application provide an electrochemical apparatus and an electric device. The electrochemical apparatus includes: an electrode plate, where the electrode plate includes a current collector, an active material layer, and a tab connection sheet, and when the electrode plate is in an unfolded state, the current collector includes a first part and a second part in a width direction of the electrode plate, the active material layer is disposed on a surface of the first part, the tab connection sheet overlaps with a surface of the second part to form an overlap region, and the tab connection sheet is welded to the surface of the second part to form an electrical connection to the second part, where in a length direction of the electrode plate, an area ratio of a weld mark to a welding region is greater than or equal to 20%, and a length ratio of the welding region to the overlap region is greater than or equal to 60%.

## Description

### TECHNICAL FIELD

Embodiments of this application relate to the field of electrochemical technology, and in particular, to an electrochemical apparatus and an electric device.

### BACKGROUND

With the continuous development of technology, electrochemical apparatuses (including but not limited to lithium-ion batteries and sodium-ion batteries) have been widely used, providing convenience for the use of devices such as tablets, mobile phones, electric vehicles, and energy storage devices.

A type of electrochemical apparatus in the related technology includes a cathode electrode plate, an anode electrode plate, and a separator disposed between them. During the manufacturing process, tabs need to be electrically connected to the edge uncoated regions of the current collectors on the cathode electrode plate and anode electrode plate. For this type of electrochemical apparatus, how to improve the manufacturing yield is a technical issue to be solved.

### SUMMARY

In view of this, some embodiments of this application provide an electrochemical apparatus and an electric device to at least partially solve the above issue.

According to a first aspect, some embodiments of this application provide an electrochemical apparatus including: an electrode plate, where the electrode plate includes a current collector, an active material layer, and a tab connection sheet, and when the electrode plate is in an unfolded state, the current collector includes a first part and a second part in a width direction of the electrode plate, the active material layer is disposed on a surface of the first part, the second part is an uncoated foil region on which the active material layer is not disposed, the tab connection sheet overlaps with a surface of the second part to form an overlap region, and the tab connection sheet is welded to the surface of the second part to form an electrical connection to the second part, where in a length direction of the electrode plate, an area ratio of a weld mark to a welding region is greater than or equal to 20%, and a length ratio of the welding region to the overlap region is greater than or equal to 60%.

In the embodiments of this application, the electrode plate includes a cathode electrode plate and an anode electrode plate. The cathode tab connection sheet of the cathode electrode plate of the electrochemical apparatus is welded to the surface of the second part of the cathode current collector (that is, the edge uncoated region on the cathode current collector), and the anode tab connection sheet of the anode electrode plate is welded to the surface of the second part of the anode current collector (that is, the edge uncoated region on the anode current collector). Therefore, in this application, when the cathode tab is led out from the cathode current collector, it is no longer necessary to directly electrically connect the cathode tab to the second part of the cathode current collector. Instead, electrical connection to the cathode tab can be implemented through the cathode tab connection sheet welded to the second part of the cathode current collector. Similarly, in this application, when the anode tab is led out from the anode current collector, it is no longer necessary to directly electrically connect the anode tab to the second part of the anode current collector. Instead, electrical connection of the anode tab can be implemented through the anode tab connection sheet welded to the second part of the anode current collector. On this basis, during the preparation of the cathode electrode plate of the electrochemical apparatus in this application, the cathode electrode plate is not prone to wrinkle when the cathode electrode plate is subject to cold pressing; and during the preparation of the anode electrode plate of the electrochemical apparatus in this application, the anode electrode plate is not prone to wrinkle when the anode electrode plate is subject to cold pressing. Therefore, using such cathode electrode plate and anode electrode plate in manufacturing of an electrochemical apparatuses can effectively improve the manufacturing yield of the electrochemical apparatus.

Additionally, in the electrochemical apparatus of this application, along the length direction of the electrode plate, the area ratio of the weld mark to the welding region is greater than or equal to 20%, which can ensure that the second part and the tab connection sheet are stably welded. The length ratio of the welding region to the overlap region is greater than or equal to 60%, which can ensure that the weld marks are evenly distributed in the welding region and the overlap region, preventing the strength from being too large in some parts or too low in other parts due to concentration of weld marks, thus avoiding the processing difficulties.

Optionally, the electrode plate is a cathode electrode plate, the first part includes a first subpart and a second subpart that are connected, the second subpart is connected to the second part, the active material layer is disposed on the first subpart, and an insulating layer is disposed on the second subpart; in the width direction of the electrode plate, the second part includes a first side close to the first subpart and a second side far from the first subpart, and the tab connection sheet includes a first side close to the first subpart and a second side far from the first subpart; where a spacing exists between the tab connection sheet and the first subpart, and the second side of the second part is located between the first side and the second side of the tab connection sheet.

In the related technology, during the preparation process of the cathode electrode plate, one way to prevent wrinkling of the cathode electrode plate during cold pressing is to cold press the cathode electrode plates with the cathode active material layer and insulating layer disposed. Before the cold pressing, the edge uncoated region of the cathode current collector of the cathode electrode plate is stretched to make the deformation degrees of the edge uncoated region of the cathode current collector and the insulating layer tend to be consistent, thus preventing the cathode electrode plate from wrinkling in the subsequent cold pressing of the cathode electrode plate. However, although this can alleviate the wrinkling problem of the cathode electrode plate during cold pressing, the cold pressing tension of the cathode electrode plate is increased, leaving the cathode electrode plate prone to break during the cold pressing process, and reducing the manufacturing yield of the electrochemical apparatus. In the embodiments of this application, when the cathode tab is led out from the second part of the cathode current collector (that is, the edge uncoated region of the cathode current collector), it is no longer necessary to directly electrically connect the cathode tab to the second part of the cathode current collector. Instead, electrical connection to the cathode tab can be implemented through the cathode tab connection sheet welded to the second part of the cathode current collector. In this way, during the preparation of the cathode electrode plate of the electrochemical apparatus, the wrinkling problem of the cathode electrode plate in the subsequent cold pressing of the cathode electrode plate can still be alleviated, without having to stretch the second part of the cathode current collector (that is, the edge uncoated region of the cathode current collector) of the cathode electrode plate before cold pressing of the cathode electrode plate. Additionally, because it is not necessary to stretch the second part of the cathode current collector (that is, the edge uncoated region of the cathode current collector) of the cathode electrode plate, the cold pressing tension of the cathode electrode plate is reduced, alleviating the problem of the cathode electrode plate prone to break during the cold pressing process, thus increasing the manufacturing yield of the electrochemical apparatus. Additionally, in this application, the insulating layer can insulate and isolate the second subpart and the anode electrode plate, effectively preventing a short circuit between the cathode electrode plate and the anode electrode plate.

Optionally, in the width direction of the electrode plate, a width d1 of the tab connection sheet satisfies: 3 mm ≤ d1 ≤ 25 mm.

Taking the electrode plate being a cathode electrode plate as an example, if the width d1 of the cathode tab connection sheet is too small, it is difficult to weld the cathode tab connection sheet to the second part of the cathode current collector during manufacturing of the electrochemical apparatus; if the width d1 of the cathode tab connection sheet is too large, the edge of the cathode tab connection sheet is prone to collapse and the cathode tab connection sheet is also likely to break accidentally during preparation of the cathode electrode plate. In this embodiment, the width of the cathode tab connection sheet satisfies the above value range (that is, 3 mm ≤ d1 ≤ 25 mm), which can well avoid the disadvantages of the width of the cathode tab connection sheet being too small or too large, thus meeting the use needs of the electrochemical apparatus and improving the manufacturing yield of the electrochemical apparatus.

Optionally, in the width direction of the electrode plate, a width d2 of the second part satisfies: 1 mm ≤ d2 ≤ 20 mm.

Taking the electrode plate being a cathode electrode plate as an example, if the width of the second part of the cathode current collector is too small, it is difficult to ensure the welding width during manufacturing of the electrochemical apparatus, making it difficult to weld the cathode tab connection sheet to the second part of the cathode current collector; if the width of the second part of the cathode current collector is too large, during preparation of the cathode electrode plate, the second part of the cathode current collector is more likely to wrinkle after cold pressing, which easily increases energy density loss and leads to higher costs. In this embodiment, the width of the second part of the cathode current collector satisfies the above value range, which can well avoid the disadvantages of the width of the second part of the cathode current collector being too small or too large, thus meeting the use needs of the electrochemical apparatus and improving the manufacturing yield of the electrochemical apparatus.

Optionally, in the width direction of the electrode plate, a width d3 of the insulating layer satisfies: 0.5 mm ≤ d3 ≤ 5 mm.

In this embodiment, the insulating layer within this width range is used, which can effectively insulate and isolate the second subpart of the cathode current collector and the anode electrode plate to prevent a short circuit between them, thus meeting the use requirements of the electrochemical apparatus without incurring additional costs.

Optionally, in the width direction of the electrode plate, the insulating layer includes a first side close to the first subpart and a second side far from the first subpart; and under a condition that the first side of the tab connection sheet is located on the insulating layer, a spacing d4 between the first side of the tab connection sheet and the second side of the insulating layer satisfies: 0 mm ≤ d4 ≤ 8 mm; or, under a condition that the first side of the tab connection sheet is located on the second part, a spacing d4 between the first side of the tab connection sheet and the second side of the insulating layer satisfies: 0 mm ≤ d4 ≤ 10 mm.

Taking the electrode plate being a cathode electrode plate as an example, when the first side of the cathode tab connection sheet is located on the insulating layer, equivalent to that the cathode tab connection sheet is welded to the second part of the cathode current collector, a first end of the cathode tab connection sheet extends beyond the first side of the second part of the cathode current collector in a direction opposite to the width direction of the electrode plate. If the extension is too large (for example, d4 > 8 mm), the manufactured electrochemical apparatus may have an excessively large thickness. When the first side of the cathode tab connection sheet is located on the second part of the cathode current collector, and the spacing between the first side of the cathode tab connection sheet and the second side of the insulating layer is too large (for example, d4 > 10 mm), the problem of the second part of the cathode current collector being folded after welded to the cathode tab connection sheet cannot be effectively solved. In this embodiment, d4 satisfies such value range, which can avoid the disadvantage that the first end of the cathode tab connection sheet extends too much beyond the first side of the second part of the cathode current collector in the direction opposite to the width direction of the electrode plate, and can also avoid the disadvantage of d4 being too large when the first side of the cathode tab connection sheet is located on the second part of the cathode current collector, thus meeting the use needs of the electrochemical apparatus and improving the manufacturing yield of the electrochemical apparatus.

Optionally, the weld mark includes a first weld mark, where the first weld mark is formed when the second part is welded to the tab connection sheet; in the width direction of the electrode plate, the first weld mark includes a first side close to the first subpart and a second side far from the first subpart; and the second side of the first weld mark is located on the tab connection sheet, and a spacing exists between the first weld mark and the first subpart.

Taking the electrode plate being a cathode electrode plate as an example, in this application, the second side of the first weld mark is located on the cathode tab connection sheet, ensuring that the cathode tab connection sheet can be stably welded to the second part of the cathode current collector.

Optionally, in the width direction of the electrode plate, a width d5 of the first weld mark satisfies: 0.1 mm ≤ d5 ≤ 10 mm.

Taking the electrode plate being a cathode electrode plate as an example, when the width d5 of the first weld mark is too small (that is, d5 < 0.1 mm), it is difficult to ensure that the welding tensile force between the second part of the cathode current collector and the cathode tab connection sheet meets the requirements, resulting in the disadvantage of excessively small welding tensile force between the second part of the cathode current collector and the cathode tab connection sheet. When the width d5 of the first weld mark is too large (that is, d5 > 10 mm), the welding difficulty increases, and additional costs are incurred. In this embodiment, the width d5 of the first weld mark satisfies the above value range (0.1 mm ≤ d5 ≤ 10 mm), which can avoid the disadvantages of the width of the first weld mark being too small or too large, thus meeting the use needs of the electrochemical apparatus and improving the manufacturing yield of the electrochemical apparatus.

Optionally, if the first side of the first weld mark is located on the second part, a spacing d6 between the first side of the first weld mark and the first side of the tab connection sheet satisfies: 0 mm ≤ d6 ≤ 5 mm; or if the first side of the first weld mark is located on the tab connection sheet, a spacing d6 between the first side of the first weld mark and the first side of the tab connection sheet satisfies: 0 mm ≤ d6 ≤ 20 mm.

Taking the electrode plate being a cathode electrode plate as an example, when the first side of the first weld mark extends too much beyond the first side of the cathode tab connection sheet in the direction opposite to the width direction of the electrode plate (for example, d6 > 5 mm when the first side of the first weld mark is located on the second part of the cathode current collector), the part without the cathode active material is quite large. Therefore, the space proportion of the part that cannot provide energy is also large, resulting in significant energy density loss, and affecting the subsequent electrical connection between the cathode tab and the cathode tab connection sheet (for example, formation of the electrical connection between the cathode tab and the cathode tab connection sheet by welding). During this process, the cathode tab connection sheet is also prone to damage, ultimately affecting the electrical performance of the manufactured electrochemical apparatus. When the first side of the first weld mark extends too much beyond the first side of the cathode tab connection sheet in the width direction of the electrode plate (for example, d6 > 30 mm when the first side of the first weld mark is located on the cathode tab connection sheet), the cathode tab connection sheet in an unconstrained state is too wide, increasing the process difficulty during the preparation of the cathode electrode plate, and affecting the manufacturing yield of the electrochemical apparatus. In this application, d6 satisfying such value range is used, which can avoid the disadvantage caused by the first side of the first weld mark extending too much beyond the first side of the cathode tab connection sheet in the direction opposite to the width direction of the electrode plate, and the disadvantage caused by the first side of the first weld mark extending too much beyond the first side of the cathode tab connection sheet in the width direction of the electrode plate, thus meeting the use needs of the electrochemical apparatus and improving the manufacturing yield of the electrochemical apparatus.

Optionally, under a condition that a first projection of the second side of the first weld mark on the tab connection sheet overlaps with a second projection of the second part on the tab connection sheet, a spacing d7 between the second side of the first weld mark and the second side of the second part satisfies: 0 mm ≤ d7 ≤ 15 mm; or under a condition that a first projection of the second side of the first weld mark on the tab connection sheet does not overlap with a second projection of the second part of the electrode plate on the tab connection sheet, a spacing d7 between the second side of the first weld mark and the second side of the second part satisfies: 0 mm ≤ d7 ≤ 7 mm.

Taking the electrode plate being a cathode electrode plate as an example, when the first projection overlaps with the second projection, if the spacing d7 between the second side of the first weld mark and the second side of the second part of the cathode current collector is too large (for example, d7 > 15 mm when the first projection overlaps with the second projection), that is, the second side of the second part of the cathode current collector extends too much beyond the second side of the first weld mark in the width direction of the electrode plate, the second part of the cathode current collector in an unconstrained state is too wide. This increases the process difficulty during preparation of the cathode electrode plate, and affects the manufacturing yield of the electrochemical apparatus. When the first projection does not overlap with the second projection, if the spacing d7 between the second side of the first weld mark and the second side of the second part of the cathode current collector is too large (for example, d7 > 7 mm when the first projection does not overlap with the second projection), that is, the second side of the first weld mark extends too much beyond the second side of the second part of the cathode current collector in the width direction of the electrode plate, significant energy density loss is caused, affecting the subsequent electrical connection between the cathode tab and the cathode tab connection sheet (for example, formation of the electrical connection between the cathode tab and the cathode tab connection sheet by welding). During this process, the cathode tab connection sheet is also prone to damage, ultimately affecting the electrical performance of the manufactured electrochemical apparatus. In this application, d7 satisfying such value range is used, which can avoid the disadvantage caused by the second side of the second part of the cathode current collector extending too much beyond the second side of the first weld mark in the width direction of the electrode plate, and the disadvantage caused by the second side of the first weld mark extending too much beyond the second side of the second part of the cathode current collector in the width direction of the electrode plate, thus meeting the use needs of the electrochemical apparatus and improving the manufacturing yield of the electrochemical apparatus.

Optionally, the electrochemical apparatus further includes a tab, the tab is welded to the tab connection sheet to form an electrical connection, and a second weld mark is formed on the tab connection sheet; and in the width direction of the electrode plate, the second weld mark includes a first side close to the first subpart and a second side far from the first subpart; where a spacing d8 between the second side of the first weld mark and the first side of the second weld mark satisfies: 0 mm < d8 ≤ 10 mm.

Taking the electrode plate being a cathode electrode plate as an example, when the cathode tab is electrically connected to the cathode tab connection sheet by welding, the second weld mark formed on the cathode tab connection sheet should not overlap with the first weld mark. If they overlap, the welding effect between the cathode tab and the cathode tab connection sheet is affected, reducing the welding tensile force between them. If the spacing d8 between the second side of the first weld mark and the first side of the second weld mark is too large (for example, d8 > 10 mm), the energy density of the electrochemical apparatus is affected. In this embodiment, such a value range of d8 is used, which can avoid the disadvantage caused by the overlap of the second weld mark and the first weld mark, and can also avoid the disadvantage caused by the excessively large spacing d8 between the second side of the first weld mark and the first side of the second weld mark, thus meeting the use needs of the electrochemical apparatus and improving the manufacturing yield of the electrochemical apparatus.

Optionally, a welding tensile force between the second part and the tab connection sheet is greater than or equal to 70N and less than or equal to 1000N.

When the welding tensile force between the second part and the tab connection sheet is too small, the tab connection sheet is prone to fall off from the second part during use of the electrochemical apparatus. When the welding tensile force between the second part and the tab connection sheet is too large, the costs for manufacturing the electrochemical apparatus are affected. In this embodiment, the welding tensile force satisfies the above value range, which can avoid the disadvantages of the welding tensile force between the second part and the tab connection sheet being too small or too large, thus meeting the use needs of the electrochemical apparatus, and improving the manufacturing yield of the electrochemical apparatus.

According to another aspect, some embodiments of this application provide an electric device, where the electric device includes the foregoing electrochemical apparatus.

The electric device in some embodiments of this application includes the electrochemical apparatus provided in the first aspect. Because the manufacturing yield of the electrochemical apparatus is high, the manufacturing yield of the electric device is also high.

### BRIEF DESCRIPTION OF DRAWINGS

To describe the technical solutions of the embodiments of this application more clearly, the following briefly describes the accompanying drawings required for describing this application. Apparently, the accompanying drawings in the following descriptions show merely some embodiments described in this application, and persons of ordinary skill in the art may derive other drawings from these accompanying drawings.
FIG. 1 is a schematic diagram of an electrochemical apparatus according to an example of an embodiment of this application.
FIG. 2 shows a process for preparing a cathode electrode plate of an electrochemical apparatus according to an example in the related technology.
FIG. 3A shows a process for preparing a cathode electrode plate of an electrochemical apparatus according to an example of an embodiment of this application.
FIG. 3B is a schematic enlarged view of part T in FIG. 3A.
FIG. 4A is a schematic cross-sectional view of a cathode electrode plate of an electrochemical apparatus along a thickness direction according to an example of an embodiment of this application.
FIG. 4B is a schematic cross-sectional view of a cathode electrode plate of an electrochemical apparatus along a thickness direction according to another example of an embodiment of this application.
FIG. 4C is a schematic cross-sectional view of a cathode electrode plate of an electrochemical apparatus along a thickness direction according to still another example of an embodiment of this application.
FIG. 5 is a schematic diagram of an ultrasonic roll welding method according to an example of an embodiment of this application.
FIG. 6 is a schematic diagram of a first weld mark according to an example of an embodiment of this application.
FIG. 7 is a schematic diagram of a first weld mark according to another example of an embodiment of this application.
FIG. 8 is a schematic diagram of a first weld mark according to still another example of an embodiment of this application.
FIG. 9 is a schematic diagram of a first weld mark according to still another example of an embodiment of this application.
FIG. 10 is a schematic diagram of an electric device according to an example of an embodiment of this application.

### DETAILED DESCRIPTION

To make those skilled in the art understand the technical solutions in this application better, the following clearly describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application shall fall within the protection scope of the embodiments of this application.

In the following description, the electrochemical apparatus and the electrical device in the embodiments of this application are specifically described first, and then some related experimental examples and comparative examples in the embodiments of this application are provided to illustrate the significant advantages of the electrochemical apparatus and electric device provided in the embodiments of this application as compared to the prior art.

The following describes specific implementations of the electrochemical apparatus and electric device in some embodiments of this application with reference to the accompanying drawings. It should be noted that for ease of description, the structures in the following accompanying drawings may not be drawn to scale.

It should be noted that in the content of the embodiments of this application, a lithium-ion battery is used as an example of the electrochemical apparatus 10 to explain this application, but the electrochemical apparatus 10 of this application is not limited to the lithium-ion battery, and may alternatively be, for example, a sodium-ion battery.

According to a first aspect, some embodiments of this application provide an electrochemical apparatus including: an electrode plate, where the electrode plate includes a current collector, an active material layer, and a tab connection sheet, and when the electrode plate is in an unfolded state, the current collector includes a first part and a second part in a width direction of the electrode plate, the active material layer is disposed on a surface of the first part, the second part is an uncoated foil region on which the active material layer is not disposed, the tab connection sheet overlaps with a surface of the second part to form an overlap region, and the tab connection sheet is welded to the surface of the second part to form an electrical connection to the second part, where in a length direction of the electrode plate, an area ratio of a weld mark to a welding region is greater than or equal to 20%, and a length ratio of the welding region to the overlap region is greater than or equal to 60%.

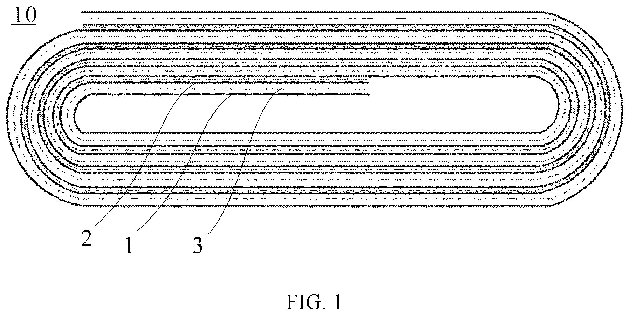

The electrode plate of the electrochemical apparatus of this application may include a cathode electrode plate and an anode electrode plate. In any one optional embodiment of this application, when the electrode plate is a cathode electrode plate, the current collector is a cathode current collector, the active material layer is a cathode active material layer, the tab connection sheet is a cathode tab connection sheet, and the tab electrically connected to the tab connection sheet is a cathode tab; and when the electrode plate is an anode electrode plate, the current collector is an anode current collector, the active material layer is an anode active material layer, the tab connection sheet is an anode tab connection sheet, and the tab electrically connected to the tab connection sheet is an anode tab. For easy description of the electrochemical apparatus in some embodiments of this application, the electrode plate being a cathode electrode plate is mainly used as an example for describing the electrochemical apparatus of this application, and the anode electrode plate is not described herein. The following description is made with reference to FIGs. 1 to 9. Referring to FIGs. 1 to 9, an embodiment of this application discloses an example electrochemical apparatus 10 which includes: a cathode electrode plate 1, an anode electrode plate 2, a separator 3, a cathode tab 41, and an anode tab. The separator 3 is disposed between the cathode electrode plate 1 and the anode electrode plate 2. The cathode electrode plate 1 includes a cathode current collector 11, a cathode active material layer 12, and a cathode tab connection sheet 51, the cathode current collector 11 includes a first part and a second part in a width direction Y of the electrode plate, the cathode active material layer 12 is disposed on a surface of the first part of the cathode current collector, and the second part of the cathode current collector is an uncoated foil region in which the cathode active material layer 12 is not disposed; the cathode tab connection sheet 51 overlaps with a surface of the second part to form an overlap region, and the cathode tab connection sheet 51 is welded to the surface of the second part of the cathode current collector to form an electrical connection to the second part of the cathode current collector. An area ratio of a weld mark to a welding region is greater than or equal to 20%, and in a length direction of the electrode plate, the length ratio of the welding region to the overlap region is greater than or equal to 60%.

In this embodiment of the application, the cathode tab connection sheet of the cathode electrode plate of the electrochemical apparatus is welded to the surface of the second part of the cathode current collector (that is, the edge uncoated region on the cathode current collector). Therefore, in this application, when the cathode tab is led out from the cathode current collector, it is no longer necessary to directly electrically connect the cathode tab to the second part of the cathode current collector. Instead, electrical connection to the cathode tab can be implemented through the cathode tab connection sheet welded to the second part of the cathode current collector. On this basis, during the preparation of the cathode electrode plate of the electrochemical apparatus in this application, the cathode electrode plate is not prone to wrinkle when the cathode electrode plate is subject to cold pressing, effectively improving the manufacturing yield of the electrochemical apparatus.

Optionally, referring to FIG. 1, the electrochemical apparatus 10 may be made by winding the cathode electrode plate 1, the separator 3, and the anode electrode plate 2 together. It should be understood that this is only for illustration and should not be considered as a limitation of this embodiment. Specifically, after the electrochemical apparatus is made by winding, the separator 3 is disposed between the cathode electrode plate 1 and the anode electrode plate 2 to separate the cathode electrode plate 1 and the anode electrode plate 2, so as to prevent internal short circuits between the cathode and anode of the electrochemical apparatus, allow ions to pass through, and retain the electrolyte between the cathode electrode plate 1, separator 3, and anode electrode plate 2.

For ease of description, the first part of the cathode current collector is hereinafter referred to as the first part of the cathode current collector (with the reference number 111 in the figures), and the second part of the cathode current collector is hereinafter referred to as the second part of the cathode current collector (with the reference number 112 in the figure). In this embodiment of the cathode electrode plate 1, the first part 111 and the second part 112 of the cathode current collector may be conductive foils.

In some embodiments, when the electrode plate is the cathode electrode plate 1, the first part 111 of the cathode current collector includes a first subpart 1111 and a second subpart 1112 that are connected, and the second subpart 1112 is connected to the second part 112 of the cathode current collector, the cathode active material layer 12 is disposed on the first subpart, and an insulating layer 13 is disposed on the second subpart; in the width direction Y of the electrode plate, the second part 112 of the cathode current collector includes a first side close to the first subpart 1111 and a second side far from the first subpart 1111, the cathode tab connection sheet 51 includes a first side close to the first subpart 1111 and a second side far from the first subpart 1111; where a spacing exists between the cathode tab connection sheet 51 and the first subpart 1111, and the second side of the second part 112 of the cathode current collector is located between the first side of the cathode tab connection sheet 51 and the second side of the cathode tab connection sheet 51.

Specifically, in the related technology, during the preparation process of the cathode electrode plate, one way to prevent wrinkling of the cathode electrode plate during cold pressing is to cold press the cathode electrode plates with the cathode active material layer and insulating layer disposed. Before the cold pressing, the edge uncoated region of the cathode current collector of the cathode electrode plate is stretched to make the deformation degrees of the edge uncoated region of the cathode current collector and the insulating layer tend to be consistent, thus preventing the cathode electrode plate from wrinkling in the subsequent cold pressing of the cathode electrode plate. However, although this can alleviate the wrinkling problem of the cathode electrode plate during cold pressing, the cold pressing tension of the cathode electrode plate is increased, leaving the cathode electrode plate prone to break during the cold pressing process, and reducing the manufacturing yield of the electrochemical apparatus.

In the embodiments of this application, when the cathode tab 41 is led out from the second part 112 of the cathode current collector 11 (that is, the edge uncoated region of the cathode current collector 11), it is no longer necessary to directly electrically connect the cathode tab 41 to the second part 112 of the cathode current collector. Instead, electrical connection to the cathode tab 41 can be implemented through the cathode tab connection sheet 51 welded to the second part 112 of the cathode current collector. In this way, during the preparation of the cathode electrode plate 1 of the electrochemical apparatus 10, the wrinkling problem of the cathode electrode plate 1 in the subsequent cold pressing of the cathode electrode plate 1 can still be alleviated, without having to stretch the second part 112 of the cathode current collector (that is, the edge uncoated region of the cathode current collector 11) of the cathode electrode plate 1 before cold pressing of the cathode electrode plate 1. Additionally, because it is not necessary to stretch the second part 112 of the cathode current collector (that is, the edge uncoated region of the cathode current collector 11) of the cathode electrode plate 1, the cold pressing tension of the cathode electrode plate 1 is reduced, alleviating the problem of the cathode electrode plate 1 prone to break during the cold pressing process, thus increasing the manufacturing yield of the electrochemical apparatus.

The insulating layer 13 can insulate and isolate the second subpart 1112 and the anode electrode plate 2, effectively preventing a short circuit between the cathode electrode plate 1 and the anode electrode plate 2.

Since the first part 111 of the cathode current collector can be a conductive foil, both the first subpart 1111 and the second subpart 1112 can be the conductive foil. In the cathode current collector 11, the first subpart 1111 and the second part 112 of the cathode current collector are respectively connected on two sides of the second subpart 1112 in the width direction of the electrode plate.

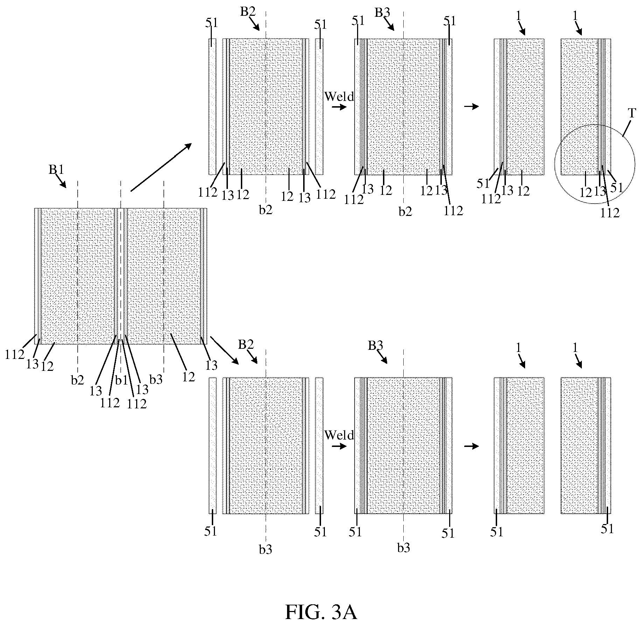

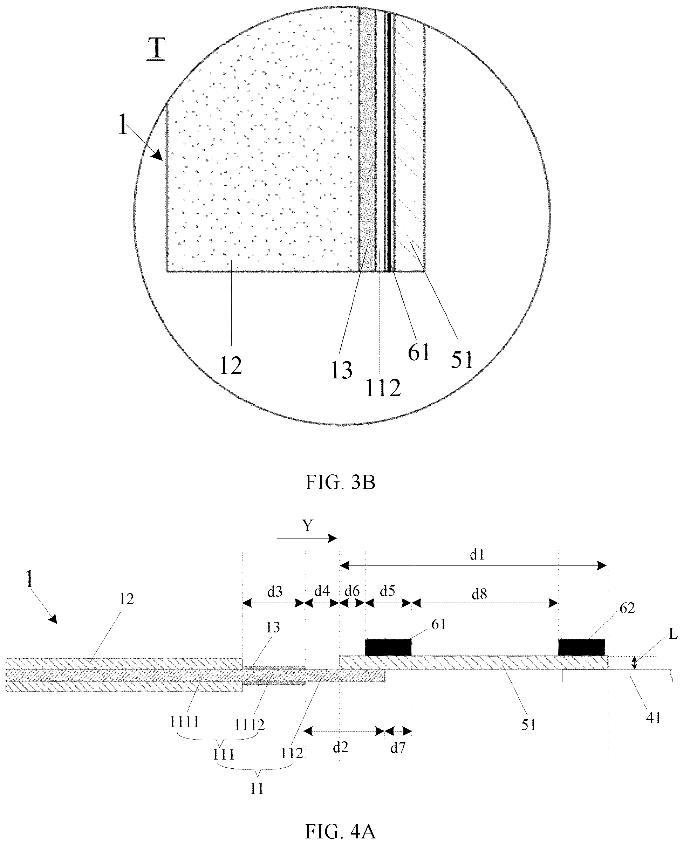

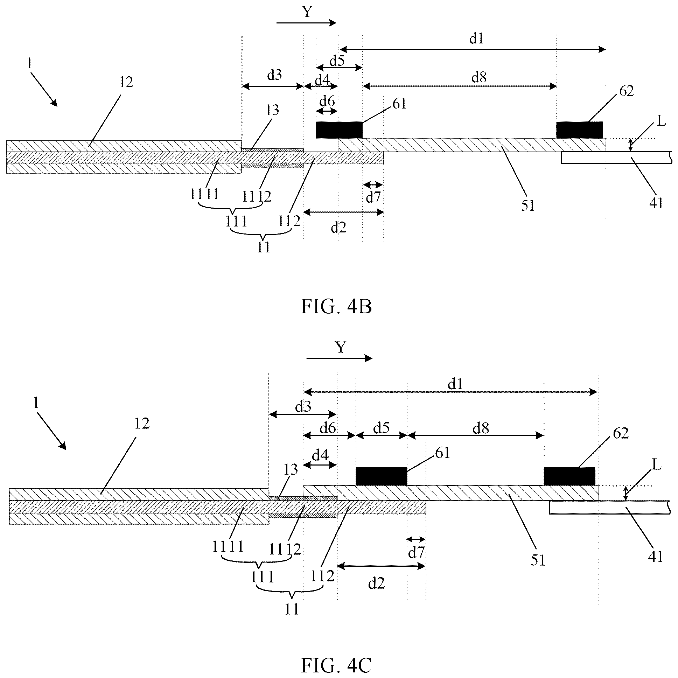

FIGs. 4A, 4B, and 4C are schematic cross-sectional views of the cathode electrode plate 1 in FIG. 3A in a thickness direction.

FIGs. 4A, 4B, and 4C also schematically show the position of the cathode tab 41 that is electrically connected to the cathode tab connection sheet 51. FIGs. 4A, 4B, and 4C are only for illustration of this embodiment and should not be considered as limitations of this embodiment.

A spacing exists between the cathode tab connection sheet 51 and the first subpart 1111, which can prevent the manufactured electrochemical apparatus 10 from being too thick. Additionally, ions can pass through the separator 3, the cathode active material layer 12, and the anode active material layer 22, but cannot pass through the cathode tab connection sheet 51 (as described later, the cathode tab connection sheet 51 may be a conductive foil, such as an aluminum foil). Therefore, the spacing between the cathode tab connection sheet 51 and the first part 111 of the cathode current collector can prevent the cathode tab connection sheet 51 from being sandwiched between the cathode active material layer 12 (including the cathode active material) of the cathode electrode plate 1 and the anode active material layer 22 (including the anode active material) of the anode electrode plate 2, obstructing ion transmission between the cathode and the anode.

The second side of the second part 112 of the cathode current collector is located between the first side of the cathode tab connection sheet 51 and the second side of the cathode tab connection sheet 51, which means that the cathode tab connection sheet 51 can serve as an extension part of the second part 112 of the cathode current collector.

The cathode tab 41 and the anode tab 42 of the electrochemical apparatus 10 in this embodiment may be located on a same side of the electrochemical apparatus 10 or on different sides of the electrochemical apparatus 10.

In this embodiment, the cathode active material layer 12 disposed on the first subpart 1111 of the cathode electrode plate 1 includes a cathode active material. The cathode active material is not limited to a specific type herein, for example, may be lithium cobalt oxide, lithium manganese oxide, or lithium iron phosphate. In some embodiments, the cathode active material layer 12 may be a coating, meaning that the cathode active material layer 12 is applied on the first subpart 1111. This can ensure the structural stability of the cathode active material layer 12 disposed on the first subpart 1111.

The following briefly describes the electrochemical apparatus 10 in some embodiments of this application with reference to the preparation of the cathode electrode plate of the electrochemical apparatus in the related technology. It should be understood that this is only for ease of understanding and not as any limitation of this embodiment.

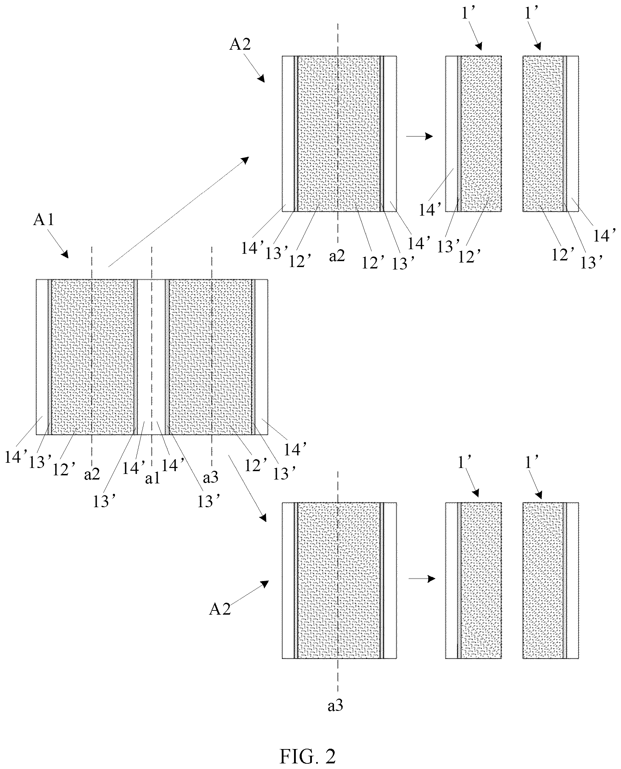

FIG. 2 shows a preparation process of a cathode electrode plate 1' of an electrochemical apparatus in the related technology. In this example, the cathode active material layer and the insulating layer of the cathode electrode plate are coatings applied to the cathode current collector. Referring to the structure A1 in FIG. 2, the structure A1 is actually multiple cathode electrode plates that have not been further processed (simply, the structure A1 is cut along the dashed line a1, and then cut along the dashed lines a2 and a3 respectively, thereby dividing the structure A1 into four cathode electrode plates 1', as specifically described below). After the cathode active material layer 12' and the insulating layer 13' are applied to the cathode current collector 11', the structure A1 is obtained, and the structure A1 is cold pressed (for example, cold pressed using a step roller (that is, a special cold pressing roller) matching the structure A1). For use of step rollers, different sizes of step rollers need to be designed to match the structures A1 of different sizes. For details, reference may be made to the related technology of using step rollers for cold pressing the electrode plate, and details are not described herein). During the cold pressing process, because the thickness of the edge uncoated region 14' of the cathode current collector 11' is different from the deformation degree of the coating region (that is, the insulating layer 13' and the cathode active material layer 12'), the structure A1 is easily wrinkled during the cold pressing process, that is, the subsequently manufactured cathode electrode plate 1' is wrinkled. Therefore, generally, the edge uncoated region 14' is stretched first to make the deformation tend to be consistent during the cold pressing process, thus preventing the cathode electrode plate from being wrinkled when the structure A1 is subsequently cold pressed. After the stretching and cold pressing steps are completed, the cold-pressed structure A1 is cut along the dashed line a1 (for example, the cutting method may be laser cutting) to obtain two structures A2 (each structure A2 is equivalent to two cathode electrode plates 1'). Then the two structures A2 are cut along the dashed lines a2 and a3 respectively (for example, the cutting method may be laser cutting) to obtain four cathode electrode plates 1' shown in FIG. 2. When the finally obtained cathode electrode plate 1' is used for manufacturing the electrochemical apparatus, the cathode electrode plate 1' can be wound with the separator, the anode electrode plate, and the like, and the edge uncoated region 14' and the cathode tab can be electrically connected (for example, electrically connected by welding), to finally manufacture the electrochemical apparatus.

Correspondingly, the electrochemical apparatus 10 in some embodiments of this application is briefly described with reference to the preparation of the cathode electrode plate 1 of the electrochemical apparatus 10 in some embodiments of this application. It should be understood that this is only for ease of understanding and not as any limitation of this embodiment.

FIG. 3A shows a preparation process of the cathode electrode plate 1 of an electrochemical apparatus 10 in this embodiment, and FIG. 3B is a schematic enlarged view of part T in FIG. 3A. In the example shown in FIG. 3A, the cathode active material layer 12 and the insulating layer 13 of the cathode electrode plate 1 are coatings applied to the first subpart 1111 and the second subpart 1112 of the cathode current collector 11, respectively. Referring to the structure B1 in FIG. 3A, the structure B1 is actually multiple cathode electrode plates 1 that have not been further processed (simply, the structure A1 is cut along the dashed line b1, and then cut along the dashed lines b2 and b3 respectively, thereby dividing the structure B1 into four cathode electrode plates 1, as specifically described below). After the cathode active material layer 12 and the insulating layer 13 are applied to the cathode current collector 11, the structure B1 is obtained, and the structure B1 is cold pressed (for the implementation method of cold pressing herein, reference may be made to the related technology of using a cold pressing roller for cold pressing the electrode plate, and details are not described herein). According to comparison between the structures B1 and A1 in FIG. 3A and FIG. 2, because it is not necessary to stretch the edge uncoated region of the structure B1 (the edge uncoated region is the second part 112 of the cathode current collector) before cold pressing, the width of the edge uncoated region of the cathode current collector 11 in the structure B1 in FIG. 3A is significantly smaller as compared to the structure A1 in FIG. 2. After the cold pressing step is completed, the cold-pressed structure B1 is cut along the dashed line b1 (for example, the cutting method may be laser cutting) to obtain two structures B2. Cathode tab connection sheets 51 are respectively welded on the edge uncoated regions (that is, the second part 112 of the cathode current collector) on two sides of the structure B2. After the welding is completed, two structures B3 are obtained (each structure B3 is equivalent to two cathode electrode plates 1). Then the two structures B3 are cut along the dashed lines b2 and b3 respectively (for example, the cutting method may be laser cutting) to obtain four cathode electrode plates 1 shown in FIG. 3A (for further understanding of the structure, reference may be made to FIG. 3B). When the finally obtained cathode electrode plate 1 is used for manufacturing the electrochemical apparatus 10, the cathode electrode plate 1 can be wound with the separator 3, the anode electrode plate 2, and the like, and the cathode tab connection sheet 51 and the cathode tab 41 can be electrically connected (for example, electrically connected by welding), to finally manufacture the electrochemical apparatus 10.

It should be understood that to more illustratively show the structure, FIG. 3A omits show the first weld mark 61 formed by welding the cathode tab connection sheet 51 to the second part 112 of the cathode current collector, while the schematic enlarged view of FIG. 3B schematically shows the first weld mark 61. FIGs. 3A and 3B do not constitute any limitation of this application.

In some optional embodiments, the second part 112 of the cathode current collector is a conductive foil, and the resistance R per square millimeter of the conductive foil (that is, the second part 112 of the cathode current collector) satisfies: R < 20 mΩ, which allows the second part 112 of the cathode current collector to have good conductive performance, meeting the use needs of the electrochemical apparatus 10.

As mentioned earlier, the first subpart 1111 and/or the second subpart 1112 of the first part 111 of the cathode current collector may also be a conductive foil. For example, the resistance per square millimeter of the conductive foil of the first subpart 1111 and/or the second subpart 1112 is less than 20 mΩ, which also allows the first subpart 1111 and/or the second subpart 1112 to have good conductive performance, meeting the use needs of the electrochemical apparatus 10.

In this embodiment, the second part 112 of the cathode current collector is welded to the cathode tab connection sheet 51, and the cathode tab 41 is electrically connected to the cathode tab connection sheet 51. The cathode tab connection sheet 51 may also be a conductive foil. Optionally, the resistance R per square millimeter of the cathode tab connection sheet 51 satisfies: R < 20 mΩ, which allows the cathode tab connection sheet 51 to have good conductive performance, meeting the use needs of the electrochemical apparatus 10.

Optionally, in actual measurement of the resistance R per square millimeter of the second part 112 of the cathode current collector or the cathode tab connection sheet 51 of the manufactured electrochemical apparatus 10, the electrochemical apparatus 10 can be disassembled first, and the clean part (that is, the part without an insulating material or a cathode active material) of the second part 112 of the cathode current collector or the cathode tab connection sheet 51 can be taken for measurement using a resistance tester. If the clean part cannot be taken, an organic solvent such as alcohol can be used to wash away the insulating material or cathode active material attached to the second part 112 of the cathode current collector or the cathode tab connection sheet 51, and then the clean part obtained after the washing can be taken for measurement using a resistance tester, or other methods can be used for measurement, which is not limited herein.

When the electrode plate is the cathode electrode plate 1, for the second part 112 of the cathode current collector and/or the cathode tab connection sheet 51 being a conductive foil, this embodiment does not specifically limit the specific material of the conductive foil. Any material can be used, provided that it can ensure the conductive performance and structural strength. For example, the conductive foil includes at least one of an aluminum foil, an aluminum-plated foil, a nickel foil, or a nickel-plated foil. The conductive foil of such material can ensure the conductive performance of the second part 112 of the cathode current collector and/or the cathode tab connection sheet 51 of the cathode electrode plate 1, meeting the use needs of the electrochemical apparatus 10.

Optionally, when the conductive foil is an aluminum-plated foil, the aluminum-plated foil includes at least one of a foil with aluminum plating on a surface of a polypropylene-based film or a foil with aluminum plating on a surface of a polyethylene terephthalate-based film. These types of conductive foils can ensure the conductive performance of the second part 112 of the cathode current collector and/or the cathode tab connection sheet 51 of the cathode electrode plate 1, meeting the use needs of the electrochemical apparatus 10.

Optionally, the second part 112 of the cathode current collector and the cathode tab connection sheet 5 in this application may be conductive foils of the same material or conductive foils of different materials, which is not limited herein.

Optionally, a thickness L of the cathode tab connection sheet 51 satisfies: 4 µm ≤ L ≤ 25 µm. If the thickness of the cathode tab connection sheet 51 is too small, the process difficulty of preparing the cathode electrode plate 1 is increased, and the cost is increased. Additionally, due to the excessively small thickness, the strength is low, making it difficult to meet the structural strength requirements of the cathode electrode plate 1 and the cathode tab connection sheet 51. If the thickness of the cathode tab connection sheet 51 is too large, the material cost is also increased, and the energy density gain of the electrochemical apparatus 10 is reduced. In this embodiment, the thickness L satisfies the above value range (that is, 4 µm ≤ L ≤ 25 µm), which can well avoid the disadvantages of the thickness of the cathode tab connection sheet 51 being too small or too large, thus meeting the use needs of the electrochemical apparatus 10 and improving the manufacturing yield of the electrochemical apparatus 10. Optionally, based on 4 µm ≤ L ≤ 25 µm, the thickness L of the cathode tab connection sheet 51 satisfies: 5 µm ≤ L ≤ 20 µm. The value falling within this preferred value range can well avoid the disadvantages of the thickness of the cathode tab connection sheet 51 being too small or too large, thus meeting the use needs of the electrochemical apparatus 10 and further improving the manufacturing yield of the electrochemical apparatus 10. Within the above value range, an appropriate value of L can be selected based on needs. For example, taking 5 µm ≤ L ≤ 20 µm as an example, L can be 5 µm, 7 µm, 10 µm, 15 µm, 18 µm, 20 µm, or the like, which is not specifically limited herein.

Optionally, during actual measurement of the thickness L of the cathode tab connection sheet 51 of the manufactured electrochemical apparatus 10, the electrochemical apparatus 10 can be disassembled first, and the unwelded part of the cathode tab connection sheet 5 between the first weld mark 61 and the second weld mark 62 (the first weld mark 61 and the second weld mark 62 are described later) can be taken and measured using a micrometer or a thousandth micrometer, or measured using other methods, which is not limited herein.

Optionally, to ensure the strength of the cathode tab connection sheet 51, a breaking strength S of the cathode tab connection sheet 51 satisfies: 80 MPa ≤ S ≤ 800 MPa. If the breaking strength is too low, the cathode tab connection sheet 51 is easily broken during the preparation process, increasing the process difficulty of preparing the cathode electrode plate 1, and increasing the cost. Additionally, the excessively low breaking strength makes it difficult to meet the structural strength requirements of the cathode electrode plate 1 and the cathode tab connection sheet 51. If the breaking strength S of the cathode tab connection sheet 51 is too high, the process difficulty of preparing the cathode electrode plate 1 is increased, and the cost is increased. In this embodiment, the breaking strength S satisfies the above value range (that is, 80 MPa ≤ S ≤ 800 MPa), which can avoid the disadvantages of the breaking strength of the cathode tab connection sheet 51 being too low or too high, thus meeting the use needs of the electrochemical apparatus 10 and improving the manufacturing yield of the electrochemical apparatus 10. Optionally, based on 80 MPa ≤ S ≤ 800 MPa, the breaking strength S of the cathode tab connection sheet 51 satisfies: 100 MPa ≤ S ≤ 450 MPa. The value falling within this preferred value range can better avoid the disadvantages of the breaking strength of the cathode tab connection sheet 51 being too low or too high, thus meeting the use needs of the electrochemical apparatus 10 and further improving the manufacturing yield of the electrochemical apparatus 10. Within the above value range, an appropriate value can be selected for the breaking strength S of the cathode tab connection sheet 51 based on needs. For example, taking 100 MPa ≤ S ≤ 450 MPa as an example, the breaking strength S can be 100 MPa, 150 MPa, 200 MPa, 250 MPa, 300 MPa, 350 MPa, 400 MPa, 450 MPa, or the like, which is not specifically limited herein.

Optionally, the value range of the thickness of the second part 112 of the cathode current collector 11 of the cathode electrode plate 1 may be the same as the value range of the thickness of the cathode tab connection sheet 51, that is, the value range of the thickness of the second part 112 of the cathode current collector may be 4 µm to 25 µm, further optionally 5 µm to 20 µm; and the value range of the breaking strength of the second part 112 of the cathode current collector may be the same as the value range of the breaking strength of the cathode tab connection sheet 51, that is, the value range of the breaking strength of the second part 112 of the cathode current collector may be 80 MPa to 800 MPa, further optionally 100 MPa to 450 MPa.

In addition, when both the second part 112 of the cathode current collector and the cathode tab connection sheet 51 are conductive foils, the thickness of the second part 112 of the cathode current collector and the thickness of the cathode tab connection sheet 51 can be the same or different, and the breaking strength of the second part 112 of the cathode current collector and the breaking strength of the cathode tab connection sheet 51 can be the same or different.

Optionally, when the first subpart 1111 and/or the second subpart 1112 of the cathode current collector 11 of the cathode electrode plate 1 is a conductive foil, it may use the same material as the second part 112 of the cathode current collector, and has a thickness satisfying the same value range as the second part 112 of the cathode current collector. That is, when the first subpart 1111 and/or the second subpart 1112 is a conductive foil, it can be at least one of an aluminum foil, an aluminum-plated foil, a nickel foil, or a nickel-plated foil; and the aluminum-plated foil includes at least one of a foil with aluminum plating on a surface of a polypropylene-based film or a foil with aluminum plating on a surface of a polyethylene terephthalate-based film; the value range of the thickness of the first subpart 1111 and/or the second subpart 1112 is 4 µm to 25 µm, preferably 5 µm to 20 µm; and the value range of the breaking strength of the first subpart 1111 and/or the second subpart 1112 is 80 MPa to 800 MPa, preferably 100 MPa to 450 MPa, thus meeting the corresponding use needs of the electrochemical apparatus 10.

In this embodiment, the insulating layer 13 is disposed on the second subpart 1112 of the cathode electrode plate 1. In this embodiment, the material of the insulating layer 13 is not specifically limited, which, for example, may be at least one of aluminum oxide or silicon oxide. Using the insulating layer 13 of such material to insulate and isolate the second subpart 1112 of the cathode current collector and the anode electrode plate 2 can effectively prevent a short circuit between the cathode electrode plate 1 and the anode electrode plate 2.

Optionally, the insulating layer 13 may be a coating (for example, an aluminum oxide coating or a silicon oxide coating), meaning that the insulating layer 13 is applied to the second subpart 1112 of the cathode electrode plate 1. This ensures the structural stability of the insulating layer 13 disposed on the second subpart 1112.

In this embodiment, in the width direction Y of the electrode plate, a width d3 of the insulating layer 13 satisfies: 0.5 mm ≤ d3 ≤ 5 mm.

Referring to FIGs. 4A, 4B, and 4C, the width d3 of the insulating layer 13 is a distance d3 between the first side of the insulating layer 13 and the second side of the insulating layer 13 in the width direction Y of the electrode plate. In this embodiment, the insulating layer 13 within this width range is used, which can effectively insulate and isolate the second subpart 1112 of the cathode current collector 11 and the anode electrode plate 2 to prevent a short circuit between them, thus meeting the use requirements of the electrochemical apparatus 10 without incurring additional costs.

Optionally, for the cathode electrode plate 1, the width d3 of the insulating layer 13 is equal to the width of the second subpart 1112 (that is, the distance between the first side of the second subpart 1112 and the second side of the second subpart 1112 in the width direction Y of the electrode plate). It can be understood that the first side of the second subpart 1112 is a side of the second subpart 1112 close to the first subpart 1111 in the width direction Y of the electrode plate; and the second side of the second subpart 1112 is a side of the second subpart 1112 far from the first subpart 1111 in the width direction Y of the electrode plate.

In the embodiments of this application, in some optional embodiments, a welding tensile force between the second part of the current collector and the tab connection sheet of the electrode plate is greater than or equal to 70N and less than or equal to 1000N.

For example, in some optional embodiments, when the electrode plate is the cathode electrode plate 1, the second part 112 of the cathode current collector is welded to the cathode tab connection sheet 51, and a welding tensile force F between the second part 112 of the cathode current collector and the cathode tab connection sheet 51 satisfies: 70N ≤ F ≤ 1000N. If the welding tensile force F between the second part 112 of the cathode current collector and the cathode tab connection sheet 51 is too small, the cathode tab connection sheet 51 is prone to fall off from the second part 112 of the cathode current collector during use of the electrochemical apparatus 10; and if the welding tensile force F between the second part 112 of the cathode current collector and the cathode tab connection sheet 51 is too large, the cost for manufacturing the electrochemical apparatus 10 is affected. In this embodiment, the welding tensile force F satisfies the above value range (that is, 70N ≤ F ≤ 1000N), which can avoid the disadvantages of the welding tensile force F between the second part 112 of the cathode current collector and the cathode tab connection sheet 51 being too small or too large, thus meeting the use needs of the electrochemical apparatus 10 and improving the manufacturing yield of the electrochemical apparatus 10.

Optionally, based on 70N ≤ F ≤ 1000N, the welding tensile force F between the second part 112 of the cathode current collector and the cathode tab connection sheet 51 satisfies: 150N ≤ F ≤ 500N. The value falling within this preferred value range can well avoid the disadvantages of the welding tensile force between the second part 112 of the cathode current collector and the cathode tab connection sheet 51 being too small or too large, thus meeting the use needs of the electrochemical apparatus 10 and further improving the manufacturing yield of the electrochemical apparatus 10.

Within the above value range, an appropriate value can be selected for the welding tensile force F based on needs. For example, taking 150N ≤ F ≤ 500N as an example, the welding tensile force F can be 150N, 200N, 300N, 350N, 400N, 500N, or the like, which is not specifically limited herein.

The method for testing the welding tensile force F is not limited herein, and reference may be made to the related technology. For example, an example method for testing the welding tensile force F may be as follows: taking samples of the welded second part 112 of the cathode current collector and the cathode tab connection sheet 51, placing them in a tensile machine, and clamping the second part 112 of the cathode current collector and the cathode tab connection sheet 51 respectively with the left clamp and the right clamp along the width direction Y of the electrode plate, where the left clamp and the right clamp are set at an appropriate distance (for example, 20 mm), and the welding region (for example, the first weld mark 61 mentioned below) is set in the middle of the left clamp and the right clamp; and during the test, keeping the left clamp and the right clamp from contacting the welding region (for example, the first weld mark 61 mentioned below), fixing the left clamp and pulling the right clamp in a direction leaving the left clamp at an appropriate speed (for example, 1 mm/s); and after breaking, checking whether it is the welding region that breaks, and if so, recording the welding tensile force F at this time, otherwise, replacing the samples and testing again. Certainly, this is only an example and not a limitation of the embodiments.

A method similar to that for testing the welding tensile force F can be used to test the breaking strength of the cathode tab connection sheet 51. An appropriate width (for example, 10 mm) of the cathode tab connection sheet 51 is taken, the cathode tab connection sheet 51 is clamped using the left clamp and the right clamp, the left clamp is fixed, and the right clamp is pulled in a direction leaving the left clamp at an appropriate speed (for example, 1 mm/s). Then, the breaking strength of the cathode tab connection sheet 51 can be tested. The similar method can be used to test the breaking strength of each part of the cathode current collector 11, and details are not described herein. Certainly, this is only an example and not a limitation of the embodiments.

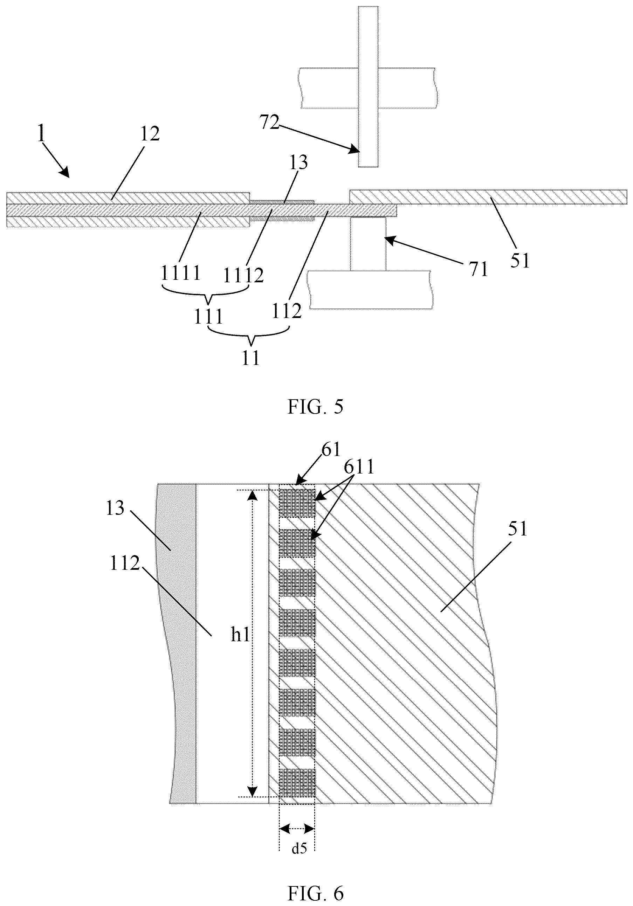

In some embodiments of this application, the second part 112 of the cathode current collector and the cathode tab connection sheet 51 can be welded using any welding method, such as ultrasonic roll welding. FIG. 5 shows an ultrasonic roll welding method. The second part 112 of the cathode current collector and the cathode tab connection sheet 51 are partially overlapped and placed on the roll welding base 71, then the rolling welding head 72 is aligned with the cathode tab connection sheet 51 and the second part 112 of the cathode current collector on the rolling welding base 71, and ultrasonic welding is performed. During the welding process, the roll welding head 72 emits high-frequency ultrasonic waves to the cathode tab connection sheet 51 and the second part 112 of the cathode current collector. Under the condition that the roll welding head 72 applies pressure to both, the contact surfaces of the cathode tab connection sheet 51 and the second part 112 of the cathode current collector are subjected to friction to produce heat energy. The heat energy causes the welding positions of the cathode tab connection sheet 51 and the second part 112 of the cathode current collector to melt, so that the cathode tab connection sheet 51 and the second part 112 of the cathode current collector are finally welded and connected. Certainly, this is only an example in the embodiments of this application and does not constitute any limitation of this application.

In some optional embodiments, the weld mark includes a first weld mark 61. Taking the electrode plate being the cathode electrode plate 1 as an example, in the electrochemical apparatus 10, the first weld mark 61 is formed when the second part 112 of the cathode current collector is welded to the cathode tab connection sheet 51; in the width direction Y of the electrode plate, the first weld mark 61 includes a first side close to the first subpart 1111 and a second side far from the first subpart 1111; and the second side of the first weld mark 61 is located on the cathode tab connection sheet 51, and a spacing exists between the first weld mark 61 and the first subpart 1111.

Specifically, the second side of the first weld mark 61 is located on the cathode tab connection sheet 51, ensuring that the cathode tab connection sheet 51 can be stably welded to the second part 112 of the cathode current collector. The first side of the first weld mark 61 may be located on the second part 112 of the cathode current collector, or may be located on the cathode tab connection sheet 51, which is not limited herein.

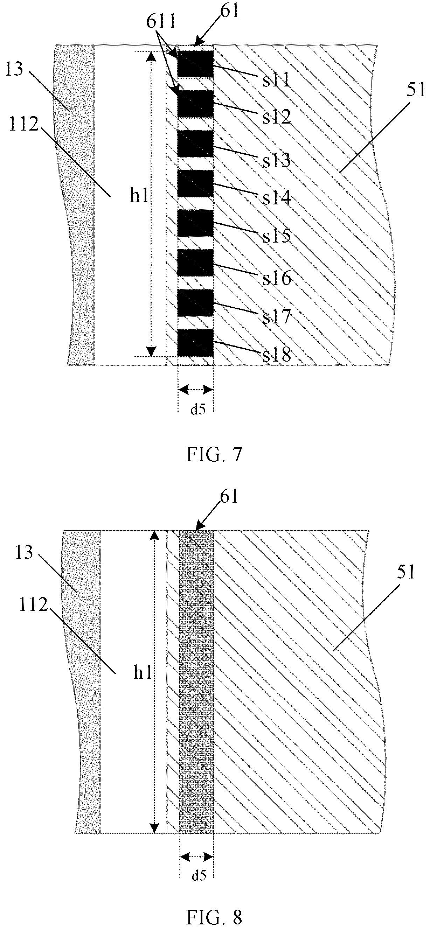

In this embodiment, the first weld mark 61 is not limited to a specific shape. For example, as shown in FIGs. 6 and 7, the first weld mark 61 can be a combination of multiple first sub-weld marks 611, with a spacing between every two adjacent first sub-weld marks 611. The first sub-weld mark 611 can be include multiple small weld spots with regular or irregular shapes. For example, the shape of the small weld spots can be circular, rectangular, or other polygonal shapes. Optionally, the shape of the first sub-weld mark 611 formed by the arrangement of small weld spots can be a polygon such as a parallelogram, a rectangle (or a square), or a triangle, or can be other irregular shapes. For example, as shown in FIG. 6, the shape of the first sub-weld mark 611 is a rectangle composed of small weld spots, and the small weld spots are rectangular. Alternatively, for example, as shown in FIG. 7, each first sub-weld mark 611 can be a complete weld mark. This is not limited herein.

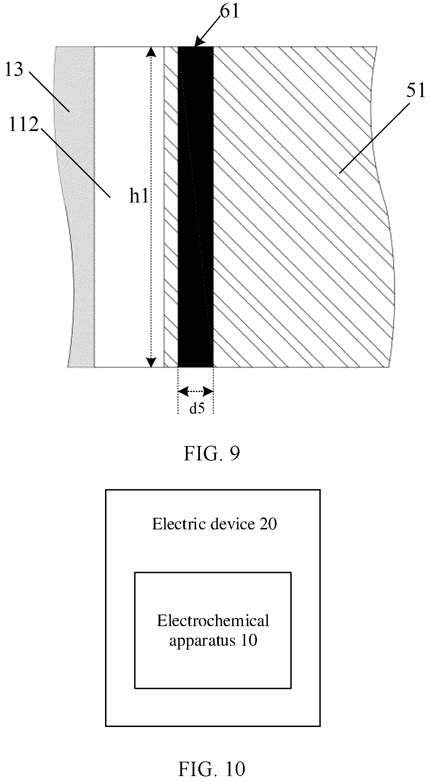

For another example, as shown in FIGs. 8 and 9, the first weld mark 61 can alternatively be a continuous weld mark. The continuous weld mark can be a complete weld mark (the complete weld mark can be understood with reference to FIG. 9, which is not described herein). Alternatively, the continuous weld mark can be a combination of multiple small weld spots with regular or irregular shapes. For example, the small weld spots can be circular, rectangular, or of other polygonal shapes (which can be understood with reference to FIG. 8 and is not described herein). This is not limited in this embodiment.

In the electrochemical apparatus of this application, when the electrode plate is in an unfolded state, the area of the weld mark formed by welding the tab connection sheet on the surface of the second part of the current collector of the electrode plate refers to: a sum of the areas of all weld marks (that is, small weld spots, complete weld marks, and the like) formed when the tab connection sheet is welded to the surface of the second part of the current collector of the electrode plate; the area of the welding region refers to: the area of the minimum circumscribed region of all weld marks (that is, small weld spots, complete weld marks, and the like) formed when the tab connection sheet is welded to the surface of the second part of the current collector of the electrode plate; the region where the tab connection sheet overlaps with the surface of the second part is an overlap region (that is, the area of the projection of the tab connection sheet on the surface of the second part in the thickness direction of the electrode plate); the length of the welding region refers to: a maximum distance between two ends of the welding region in the length direction of the electrode plate; and the length of the overlap region refers to: a distance between two ends of the overlap region in the length direction of the electrode plate. In this application, the area ratio of the weld mark to the welding region of the electrode plate is greater than or equal to 20%; and the length ratio of the welding region to the overlap region is greater than or equal to 60%.

Therefore, for the electrode plate being the cathode electrode plate 1, the area of the weld mark can refer to a sum of the areas of all weld marks (that is, small weld spots, complete weld marks, and the like) included in the first weld mark 61 formed by welding the tab connection sheet to the second part of the current collector of the electrode plate. The area of the welding region can refer to the area of the minimum circumscribed rectangular region of all weld marks (that is, small weld spots, complete weld marks, and the like) included in the first weld mark 61. In this application, the area ratio of the weld mark to the welding region of the electrode plate is greater than or equal to 20%, and the length ratio of the welding region to the overlap region is greater than or equal to 60%.

Taking the first weld mark 61 as an example, the area of the weld mark is the area of the first weld mark 61. For a case that the first weld mark 61 is a combination of multiple first sub-weld marks 611 with a spacing between every two adjacent first sub-weld marks 611, the area (denoted as Sy1) of the weld mark is equal to a sum of the areas of all first sub-weld marks 611. For the area of each first sub-weld mark 611 in FIG. 6, since each first sub-weld mark 611 includes multiple small weld spots, the area of the first sub-weld mark 611 in FIG. 6 is a sum of the areas of all small weld spots in the first sub-weld mark 611. For another example, in FIG. 7 where each first sub-weld mark 611 is a complete weld mark, the area Sy1 of the weld mark is equal to s11 + s12 + s13 + s14 + s15 + s16 + s17 + s18, where s11, s12, s13, s14, s15, s16, s17, and s18 are the areas of the first sub-weld marks 611. For a case that the first weld mark 61 is a continuous weld mark, as shown in FIG. 8, the continuous weld mark includes a combination of multiple small weld spots, and the area of the weld mark is equal to a sum of the areas of all small weld spots. As shown in FIG. 9, the continuous weld mark is a complete weld mark, and the area of the weld mark is equal to the area of the complete weld mark. Referring to FIGs. 6 and 7, the length of the overlap region is equal to the length of the electrode plate, and the length of the welding region is h1. In this case, the length ratio of the welding region to the overlap region is greater than 60%. Referring to FIGs. 8 and 9, the length of the overlap region is equal to the length of the electrode plate, and the length of the welding region is h1, which is also equal to the length of the electrode plate. In this case, the length ratio of the welding region to the overlap region is equal to 60%.

In the examples shown in FIGs. 6, 7, 8, and 9, the area of the welding region is denoted as Sz1, and Sz1 = h1 * d5, where h1 is the length of the minimum circumscribed rectangular region (that is, the length of the welding region), and d5 is the width of the minimum circumscribed rectangular region. In addition, as described later, d5 is the width of the first weld mark 61, that is, a distance between the first side of the first weld mark 61 and the second side of the first weld mark 61 in the width direction Y of the electrode plate.

The area ratio of the weld mark to the welding region is denoted as P. When the electrode plate is the cathode electrode plate 1, taking the cases in FIGs. 7 and 9 for example: in FIG. 7, P = Sy1/Sz1 = (s11 + s12 + s13 + s14 + s15 + s16 + s17 + s18)/(h1 * d5) > 20%; and in FIG. 9, P = Sy1/Sz1 = (h1 * d5)/(h1 * d5) = 100% > 20%. The cases in FIGs. 6 and 8 should also satisfy P > 20%. Additionally, the length ratio of the welding region to the overlap region should not be too small and should be at least greater than or equal to 60%, to ensure that the weld marks are evenly distributed in the welding region of the overlap region, preventing the strength from being too high in some parts or too low in other parts caused by concentration of weld marks, and thus avoiding the processing difficulties.

In this application, the area ratio of the weld mark to the welding region P is > 20%, and the length ratio of the welding region to the overlap region is greater than or equal to 60%, meeting the need for the tab connection sheet of the electrochemical apparatus to be stably welded to the surface of the second part.

In some optional embodiments, as shown in FIGs. 4A, 4B, and 4C, in the width direction Y of the electrode plate, a width d5 of the first weld mark 61 satisfies: 0.1 mm ≤ d5 ≤ 10 mm. It can be understood that the width d5 of the first weld mark 61 is a distance between the first side of the first weld mark 61 and the second side of the first weld mark 61 in the width direction Y of the electrode plate. The width d5 of the first weld mark 61 can also be understood with reference to FIGs. 6, 7, 8, and 9.

When the width d5 of the first weld mark 61 is too small (that is, d5 < 0.1 mm), it is difficult to ensure that the welding tensile force between the second part 112 of the cathode current collector and the cathode tab connection sheet 51 meets the requirement, resulting in the disadvantage of the welding tensile force F being too low. When the width d5 of the first weld mark 61 is too large (that is, d5 > 10 mm), the welding difficulty increases, and additional costs are incurred. In this embodiment, the width d5 of the first weld mark 61 satisfies the above value range (0.1 mm ≤ d5 ≤ 10 mm), which can avoid the disadvantages of the width of the first weld mark 61 being too small or too large, thus meeting the use needs of the electrochemical apparatus 10 and improving the manufacturing yield of the electrochemical apparatus 10.

Within the above value range, an appropriate value can be selected for the width d5 of the first weld mark 61 based on needs. For example, taking 0.1 mm ≤ d5 ≤ 10 mm as an example, d5 can be 0.1 mm, 1 mm, 3 mm, 5 mm, 8 mm, 10 mm, or the like, which is not specifically limited herein.

In some optional embodiments, as shown in FIGs. 4A, 4B, and 4C, under a condition that the first side of the first weld mark 61 is located on the second part 112 of the cathode current collector, a spacing d6 between the first side of the first weld mark 61 and the first side of the cathode tab connection sheet 51 satisfies: 0 mm ≤ d6 ≤ 5 mm; or, under a condition that the first side of the first weld mark 61 is located on the cathode tab connection sheet 51, a spacing d6 between the first side of the first weld mark 61 and the first side of the cathode tab connection sheet 51 satisfies: 0 mm ≤ d6 ≤ 20 mm.

Specifically, FIG. 4B shows an example of the first side of the first weld mark 61 being located on the second part 112 of the cathode current collector (it should be noted that although the first side of the first weld mark 61 in FIG. 4B is not in contact with but spaced from the second part 112 of the cathode current collector, the actual representation in FIG. 4B is that the first side of the first weld mark 61 is in direct contact with the second part 112 of the cathode current collector and located on the second part 112 of the cathode current collector, so that the cathode tab connection sheet 5 is welded to the second part 112 of the cathode current collector, which is shown herein for ease of illustrating the structure and is not intended to limit this application). When the first side of the first weld mark 61 is located on the second part 112 of the cathode current collector, meaning that the first side of the first weld mark 61 extends beyond the first side of the cathode tab connection sheet 51 in a direction opposite to the width direction Y of the electrode plate, the first weld mark 61 covers the first side of the cathode tab connection sheet 51. FIGs. 4A and 4C show examples of the first side of the first weld mark 61 being located on the cathode tab connection sheet 51 are shown, meaning that the first side of the first weld mark 61 extends beyond the first side of the cathode tab connection sheet 51 in the width direction Y of the electrode plate. In this case, the first side of the cathode tab connection sheet 51 is not covered by the first weld mark 61, and the first side of the cathode tab connection sheet 51 can be in an unconstrained state, that is, the first side of the cathode tab connection sheet 51 is not welded to the second part 112 of the cathode current collector.

If the first side of the first weld mark 61 extends too much beyond the first side of the cathode tab connection sheet 51 in the direction opposite to the width direction Y of the electrode plate (for example, d6 > 5 mm when the first side of the first weld mark 61 is located on the second part 112 of the cathode current collector), the part without the cathode active material is quite large. Therefore, the space proportion of the part that cannot provide energy is also large, resulting in significant energy density loss, and affecting the subsequent electrical connection between the cathode tab 41 and the cathode tab connection sheet 51 (for example, formation of the electrical connection between the cathode tab 41 and the cathode tab connection sheet 51 by welding). During this process, the cathode tab connection sheet 51 is also prone to damage, ultimately affecting the electrical performance of the manufactured electrochemical apparatus 10. If the first side of the first weld mark 61 extends too much beyond the first side of the cathode tab connection sheet 51 in the width direction Y of the electrode plate (for example, d6 > 30 mm when the first side of the first weld mark is located on the cathode tab connection sheet 51), the cathode tab connection sheet 51 in an unconstrained state is too wide, increasing the process difficulty during the preparation of the cathode electrode plate 1, and affecting the manufacturing yield of the electrochemical apparatus 10.

In some embodiments of this application, d6 satisfying such value range is used, which can avoid the disadvantage caused by the first side of the first weld mark 61 extending too much beyond the first side of the cathode tab connection sheet 51 in the direction opposite to the width direction Y of the electrode plate, and the disadvantage caused by the first side of the first weld mark 61 extending too much beyond the first side of the cathode tab connection sheet 51 in the width direction Y of the electrode plate, thus meeting the use needs of the electrochemical apparatus 10 and improving the manufacturing yield of the electrochemical apparatus 10.

Optionally, based on the above value range, under a condition that the first side of the first weld mark 61 is located on the second part 112 of the cathode current collector, the spacing d6 between the first side of the first weld mark 61 and the first side of the cathode tab connection sheet 51 satisfies: 0 mm ≤ d6 ≤ 3 mm; or, under a condition that the first side of the first weld mark 61 is located on the cathode tab connection sheet 51, the spacing d6 between the first side of the first weld mark 61 and the first side of the cathode tab connection sheet 51 satisfies: 0 mm ≤ d6 ≤ 10 mm. The value falling within this preferred value range can better avoid the disadvantage caused by the first side of the first weld mark 61 extending too much beyond the first side of the cathode tab connection sheet 51 in the direction opposite to the width direction of the electrode plate, and the disadvantage caused by the first side of the first weld mark 61 extending too much beyond the first side of the cathode tab connection sheet 51 in the width direction of the electrode plate, thus further meeting the use needs of the electrochemical apparatus 10, and further improving the manufacturing yield of the electrochemical apparatus 10.

Within the above value range, an appropriate value can be selected for d6 based on needs. For example, when the first side of the first weld mark 61 is located on the second part 112 of the cathode current collector, taking 0 mm ≤ d6 ≤ 3 mm as an example, d6 can be 0 mm, 0.5 mm, 1 mm, 1.5 mm, 2 mm, 2.5 mm, 3.0 mm, or the like, which is not limited herein. When the first side of the first weld mark 61 is located on the cathode tab connection sheet 51, taking 0 mm ≤ d6 ≤ 10 mm as an example, d6 can be 0 mm, 1 mm, 3 mm, 5 mm, 7 mm, 8 mm, 10 mm, or the like, which is not limited herein.

In some optional embodiments, as shown in FIGs. 4A, 4B, and 4C, under a condition that a first projection of the second side of the first weld mark 61 on the cathode tab connection sheet 51 overlaps with a second projection of the second part 112 of the cathode current collector on the cathode tab connection sheet 51, a spacing d7 between the second side of the first weld mark 61 and the second side of the second part 112 of the cathode current collector satisfies: 0 mm ≤ d7 ≤ 15 mm; or, under a condition that a first projection of the second side of the first weld mark 61 on the cathode tab connection sheet 51 does not overlap with a second projection of the second part 112 of the cathode current collector on the cathode tab connection sheet 51, a spacing d7 between the second side of the first weld mark 61 and the second side of the second part 112 of the cathode current collector satisfies: 0 mm ≤ d7 ≤ 7 mm.

Understandably, the first projection may be a projection of the second side of the first weld mark 61 on the cathode tab connection sheet 51 in the thickness direction of the cathode tab connection sheet 51, and the second projection may be a projection of the second part 112 of the cathode current collector on the cathode tab connection sheet 51 in the thickness direction of the cathode tab connection sheet 51.

As shown in FIGs. 4B and 4C, when the first projection overlaps with the second projection, meaning that the second side of the second part 112 of the cathode current collector extends beyond the second side of the first weld mark 61 in the width direction of the electrode plate, the second side of the second part 112 of the cathode current collector is in an unconstrained state, that is, the second side of the second part 112 of the cathode current collector is not welded to the cathode tab connection sheet 51. As shown in FIG. 4A, when the first projection does not overlap with the second projection, meaning that the second side of the second part 112 of the cathode current collector does not extend beyond the second side of the first weld mark 61 in the width direction of the electrode plate, the second side of the second part 112 of the cathode current collector is welded to the cathode tab connection sheet 51.

When the first projection overlaps with the second projection, if the spacing d7 between the second side of the first weld mark 61 and the second side of the second part 112 of the cathode current collector is too large (for example, d7 > 15 mm when the first projection overlaps with the second projection), that is, the second side of the second part 112 of the cathode current collector extends too much beyond the second side of the first weld mark 61 in the width direction of the electrode plate, the second part 112 of the cathode current collector in an unconstrained state is too wide. This increases the process difficulty during preparation of the cathode electrode plate 1, and affects the manufacturing yield of the electrochemical apparatus 10. When the first projection does not overlap with the second projection, if the spacing d7 between the second side of the first weld mark 61 and the second side of the second part 112 of the cathode current collector is too large (for example, d7 > 7 mm when the first projection does not overlap with the second projection), that is, the second side of the first weld mark 61 extends too much beyond the second side of the second part 112 of the cathode current collector in the width direction of the electrode plate, significant energy density loss is caused, affecting the subsequent electrical connection between the cathode tab 41 and the cathode tab connection sheet 51 (for example, formation of the electrical connection between the cathode tab 41 and the cathode tab connection sheet 51 by welding). During this process, the cathode tab connection sheet 51 is also prone to damage, ultimately affecting the electrical performance of the manufactured electrochemical apparatus 10.

In some embodiments of this application, d7 satisfying such value range is used, which can avoid the disadvantage caused by the second side of the second part 112 of the cathode current collector extending too much beyond the second side of the first weld mark 61 in the width direction of the electrode plate, and the disadvantage caused by the second side of the first weld mark 61 extending too much beyond the second side of the second part 112 of the cathode current collector in the width direction of the electrode plate, thus meeting the use needs of the electrochemical apparatus 10, and improving the manufacturing yield of the electrochemical apparatus 10.

Optionally, based on the above value range, under a condition that the first projection of the second side of the first weld mark 61 on the cathode tab connection sheet 51 overlaps with the second projection of the second part 112 of the cathode current collector on the cathode tab connection sheet 51, the spacing d7 between the second side of the first weld mark 61 and the second side of the second part 112 of the cathode current collector satisfies: 0 mm ≤ d7 ≤ 10 mm; or, under a condition that the first projection of the second side of the first weld mark 61 on the cathode tab connection sheet 51 does not overlap with the second projection of the second part 112 of the cathode current collector on the cathode tab connection sheet 51, the spacing d7 between the second side of the first weld mark 61 and the second side of the second part 112 of the cathode current collector satisfies: 0 mm ≤ d7 ≤ 3 mm. The value falling within this preferred value range can better avoid the disadvantage caused by the second side of the second part 112 of the cathode current collector extending too much beyond the second side of the first weld mark 61 in the width direction of the electrode plate, and the disadvantage caused by the second side of the first weld mark 61 extending too much beyond the second side of the second part 112 of the cathode current collector in the width direction of the electrode plate, thus meeting the use needs of the electrochemical apparatus 10 and improving the manufacturing yield of the electrochemical apparatus 10.

Within the above value range, an appropriate value can be selected for d7 based on needs. For example, when the first projection overlaps with the second projection, taking 0 mm ≤ d7 ≤ 10 mm as an example, d7 can be 0 mm, 1 mm, 3 mm, 5 mm, 8 mm, 9 mm, 10 mm, or the like, which is not specifically limited herein. For example, when the first projection does not overlap with the second projection, taking 0 mm ≤ d7 ≤ 3 mm as an example, d7 can be 0 mm, 0.5 mm, 1 mm, 1.5 mm, 2 mm, 2.5 mm, 3 mm, or the like, which is not specifically limited herein.

In some optional embodiments, the electrochemical apparatus further includes a tab, and the tab is electrically connected to the tab connection sheet of the electrode plate by welding. Specifically, the electrochemical apparatus further includes a housing, part of the tab extending out of the housing. Optionally, for the housing, the cathode electrode plate 1, the separator 3, and the anode electrode plate 2 may be disposed inside the housing, and the housing can protect them. Optionally, for a pouch cell, the housing may be made of a metal-plastic film, and the metal-plastic film may be a steel-plastic film, an aluminum-plastic film, or the like. In any embodiment of this application, the electrode plate of the electrochemical apparatus 10 may be the cathode electrode plate 1 and/or the anode electrode plate 2. When the electrode plate of the electrochemical apparatus is the cathode electrode plate 1, the tab 4 electrically connected to the cathode tab connection sheet of the cathode electrode plate 1 by welding is a cathode tab; and when the electrode plate of the electrochemical apparatus is the anode electrode plate 2, the tab 4 electrically connected to the anode tab connection sheet of the anode electrode plate 2 by welding is an anode tab.

Taking the electrode plate being the cathode electrode plate 1 as an example, the tab is the cathode tab 41. As shown in FIGs. 4A, 4B, and 4C, the cathode tab 41 is electrically connected to the cathode tab connection sheet 51 by welding, and a second weld mark 62 is formed on the cathode tab connection sheet 51; and in the width direction Y of the electrode plate, the second weld mark 62 includes a first side close to the first subpart 1111 and a second side far from the first subpart 1111; where a spacing d8 between the second side of the first weld mark 61 and the first side of the second weld mark 62 satisfies: 0 mm < d8 ≤ 10 mm.

This application does not limit the specific welding process for welding the cathode tab 41 to the cathode tab connection sheet 51. For example, the welding process can be transfer welding, and the second weld mark 62 can be a transfer weld mark.

When the cathode tab 41 is electrically connected to the cathode tab connection sheet 51 by welding, the second weld mark 62 formed on the cathode tab connection sheet 51 should not overlap with the first weld mark 61. If they overlap, the welding effect between the cathode tab 41 and the cathode tab connection sheet 51 is affected, reducing the welding tensile force between them. If the spacing d8 between the second side of the first weld mark 61 and the first side of the second weld mark 62 is too large (for example, d8 > 10 mm), the energy density of the electrochemical apparatus 10 is affected. In this embodiment, such a value range of d8 is used, which can avoid the disadvantage caused by the overlap of the second weld mark 62 and the first weld mark 61, and can also avoid the disadvantage caused by the excessively large spacing d8 between the second side of the first weld mark 61 and the first side of the second weld mark 62, thus meeting the use needs of the electrochemical apparatus 10 and improving the manufacturing yield of the electrochemical apparatus 10.

Within the above value range, an appropriate value can be selected for d8 based on needs. For example, taking 0 mm < d8 ≤ 10 mm as an example, d8 can be 1 mm, 3 mm, 5 mm, 7 mm, 9 mm, 10 mm, or the like, which is not specifically limited herein.

In this embodiment of this application, a width d1 of the cathode tab connection sheet 51 (referring to FIGs. 4A, 4B, and 4C, the width d1 of the cathode tab connection sheet 51 is a distance between the first side of the cathode tab connection sheet 51 and the second side of the cathode tab connection sheet 51 in the width direction Y of the electrode plate) is not limited, as long as it meets the needs of the electrochemical apparatus 10. In some optional embodiments, in the width direction Y of the electrode plate, the width d1 of the cathode tab connection sheet 51 satisfies: 3 mm ≤ d1 ≤ 25 mm.

If the width d1 of the cathode tab connection sheet 51 is too small, it is difficult to weld the cathode tab connection sheet 51 to the second part 112 of the cathode current collector during manufacturing of the electrochemical apparatus 10; if the width d1 of the cathode tab connection sheet 51 is too large, the edge of the cathode tab connection sheet 51 is prone to collapse and the cathode tab connection sheet 51 is also likely to break accidentally during preparation of the cathode electrode plate 1. In this embodiment, the width of the cathode tab connection sheet 51 satisfies the above value range (that is, 3 mm ≤ d1 ≤ 25 mm), which can well avoid the disadvantages of the width of the cathode tab connection sheet 51 being too small or too large, thus meeting the use needs of the electrochemical apparatus 10 and improving the manufacturing yield of the electrochemical apparatus 10.

Optionally, based on 3 mm ≤ d1 ≤ 25 mm, the width d1 of the cathode tab connection sheet 51 satisfies: 5 mm ≤ d1 ≤ 25 mm. The value falling within this preferred value range can better avoid the disadvantages of the width of the cathode tab connection sheet 51 being too small or too large, thus meeting the use needs of the electrochemical apparatus 10, and further improving the manufacturing yield of the electrochemical apparatus 10.

Within the above value range, an appropriate value can be selected for the width d1 of the cathode tab connection sheet 51 based on needs. For example, taking 5 mm ≤ d1 ≤ 25 mm as an example, d1 can be 5 mm, 10 mm, 15 mm, 18 mm, 20 mm, 23 mm, 25 mm, or the like, which is not specifically limited herein.

In some embodiments of this application, a width d2 of the second part 112 of the cathode current collector 11 (referring to FIGs. 4A, 4B, and 4C, the width d2 of the second part 112 of the cathode current collector is a distance between the first side of the second part 112 of the cathode current collector and the second side of the second part 112 of the cathode current collector in the width direction Y of the electrode plate) is not limited, as long as it meets the needs of the electrochemical apparatus 10. In some optional embodiments, in the width direction Y of the electrode plate, the width d2 of the second part 112 of the cathode current collector satisfies: 1 mm ≤ d2 ≤ 20 mm.

If the width of the second part 112 of the cathode current collector is too small, it is difficult to ensure the welding width during manufacturing of the electrochemical apparatus 10, making it difficult to weld the cathode tab connection sheet 51 to the second part 112 of the cathode current collector; if the width of the second part 112 of the cathode current collector is too large, during preparation of the cathode electrode plate 1, the second part 112 of the cathode current collector is more likely to wrinkle after cold pressing, which increases energy density loss and leads to higher costs. In this embodiment, the width of the second part 112 of the cathode current collector satisfies the above value range (that is, 1 mm ≤ d2 ≤ 20 mm), which can well avoid the disadvantages of the width of the second part 112 of the cathode current collector being too small or too large, thus meeting the use needs of the electrochemical apparatus 10 and improving the manufacturing yield of the electrochemical apparatus 10.

Optionally, based on 1 mm ≤ d2 ≤ 20 mm, the width d2 of the second part 112 of the cathode current collector satisfies: 1 mm ≤ d2 ≤ 10 mm. The value falling within this preferred value range can better avoid the disadvantages of the width of the second part 112 of the cathode current collector being too small or too large, thus meeting the use needs of the electrochemical apparatus 10, and further improving the manufacturing yield of the electrochemical apparatus 10.

Within the above value range, an appropriate value can be selected for the width d2 of the second part 112 of the cathode current collector based on needs. For example, taking 1 mm ≤ d2 ≤ 10 mm as an example, d1 can be 1 mm, 3 mm, 4 mm, 5 mm, 7 mm, 8 mm, 10 mm, or the like, which is not specifically limited herein.

In some optional embodiments, as shown in FIGs. 4A, 4B, and 4C, in the width direction Y of the electrode plate, the insulating layer 13 includes a first side close to the first subpart 1111 and a second side far from the first subpart 1111; and under a condition that the first side of the cathode tab connection sheet 51 is located on the insulating layer 13, a spacing d4 between the first side of the cathode tab connection sheet 51 and the second side of the insulating layer 13 satisfies: 0 mm ≤ d4 ≤ 8 mm; or, under a condition that the first side of the cathode tab connection sheet 51 is located on the second part 112 of the cathode current collector, a spacing d4 between the first side of the cathode tab connection sheet 51 and the second side of the insulating layer 13 satisfies: 0 mm ≤ d4 ≤ 10 mm.

Specifically, referring to FIG. 4C, when the first side of the cathode tab connection sheet 51 is located on the insulating layer 13, meaning that the cathode tab connection sheet 51 is welded to the second part 112 of the cathode current collector, a first end of the cathode tab connection sheet 51 extends beyond the first side of the second part 112 of the cathode current collector in a direction opposite to the width direction Y of the electrode plate. If the extension is too large (for example, d4 > 8 mm), the manufactured electrochemical apparatus 10 may have an excessively large thickness. Referring to FIGs. 4A and 4B, when the first side of the cathode tab connection sheet 51 is located on the second part 112 of the cathode current collector, and the spacing d4 between the first side of the cathode tab connection sheet 51 and the second side of the insulating layer 13 is too large (for example, d4 > 10 mm), the problem of the second part 112 of the cathode current collector being folded after welded to the cathode tab connection sheet 51 cannot be effectively solved.

In this embodiment, d4 satisfies the above value range, which can well avoid the disadvantage caused by the first end of the cathode tab connection sheet 51 extending too much beyond the first side of the second part 112 of the cathode current collector in the direction opposite to the width direction Y of the electrode plate, and the disadvantage of d4 being too large when the first side of the cathode tab connection sheet 51 is located on the second part 112 of the cathode current collector, thus meeting the use needs of the electrochemical apparatus 10, and improving the manufacturing yield of the electrochemical apparatus 10.

The first side of the cathode tab connection sheet 51 having a spacing from the insulating layer 13 and the second part 112 of the cathode current collector are the preferred embodiments. Optionally, when the first side of the cathode tab connection sheet 51 is located on the second part 112 of the cathode current collector, a spacing d4 between the first side of the cathode tab connection sheet 51 and the second side of the insulating layer 13 satisfies: 0 mm ≤ d4 ≤ 5 mm. The value falling within this preferred value range can better avoid the disadvantage of excessively large d4 when the first side of the cathode tab connection sheet 51 is located on the second part 112 of the cathode current collector, thus meeting the use needs of the electrochemical apparatus 10, and further improves the manufacturing yield of the electrochemical apparatus 10.

It can be understood that the above content is only provided as some optional examples of the electrochemical apparatus 10 in the embodiments of this application and does not constitute any limitation to the electrochemical apparatus 10 in the embodiments of this application.

In the embodiments of this application, the electrode plate includes a cathode electrode plate and an anode electrode plate. The cathode tab connection sheet of the cathode electrode plate of the electrochemical apparatus is welded to the surface of the second part of the cathode current collector (that is, the edge uncoated region on the cathode current collector), and the anode tab connection sheet of the anode electrode plate is welded to the surface of the second part of the anode current collector (that is, the edge uncoated region on the anode current collector). Therefore, in this application, when the cathode tab is led out from the cathode current collector, it is no longer necessary to directly electrically connect the cathode tab to the second part of the cathode current collector. Instead, electrical connection to the cathode tab can be implemented through the cathode tab connection sheet welded to the second part of the cathode current collector. Similarly, in this application, when the anode tab is led out from the anode current collector, it is no longer necessary to directly electrically connect the anode tab to the second part of the anode current collector. Instead, electrical connection of the anode tab can be implemented through the anode tab connection sheet welded to the second part of the anode current collector. On this basis, during the preparation of the cathode electrode plate of the electrochemical apparatus in this application, the cathode electrode plate is not prone to wrinkle when the cathode electrode plate is subject to cold pressing; and during the preparation of the anode electrode plate of the electrochemical apparatus in this application, the anode electrode plate is not prone to wrinkle when the anode electrode plate is subject to cold pressing. Therefore, using such cathode electrode plate and anode electrode plate in manufacturing of an electrochemical apparatuses can effectively improve the manufacturing yield of the electrochemical apparatus.

According to another aspect of the embodiments of this application, with reference to the structural block diagram in FIG. 10, some embodiments of this application provide an electric device 20. The electric device 20 includes the electrochemical apparatuses 10 according to any one of the above embodiments.

Specifically, the electrochemical apparatus 10 can be used to supply power to various electric components in the electric device 20.

Since the electric device 20 in the embodiments of this application includes the foregoing electrochemical apparatus 10, and the manufacturing yield of the electrochemical apparatus 10 is high, the manufacturing yield of the electric device 20 is also high.

The following provides descriptions with reference to some actual examples of the electrochemical apparatus 10 in the embodiments of this application, as well as some comparative examples of electrochemical apparatus in the related technology. Through comparison of these examples and comparative examples, the beneficial effects of the electrochemical apparatus 10 in the embodiments of this application as compared to the related technology can be more easily seen. In these comparative examples and examples, the electrochemical apparatuses are all exemplified by lithium-ion batteries.

The electrochemical apparatus of Comparative example 1 is a conventional wound structure. The difference between Comparative example 2 differs from example 1 in that the area ratio of the weld mark to the welding region is less than 20% and the length ratio of the welding region to the overlap region is less than 60%. Due to the welding strength not meeting the requirement, during the manufacturing of the electrochemical apparatus, the welding strength is unstable, and the tab connection sheet is partially separated from the surface of the second part of the cathode, making it inconvenient to measure.

Example 1 is formed by winding the cathode electrode plate of example 1 in Table 1 and the anode electrode plate of a conventional structure. Moreover, in the cathode electrode plate, the area ratio of the weld mark to the welding region is greater than or equal to 20%, and the length ratio of the welding region to the overlap region is greater than or equal to 60%, to meet the welding stability requirements. Examples 2 to 16 are similar to Example 1. Additionally, compared to Comparative Example 1, in Examples 1 to 16, during preparation of the cathode electrode plate, the stretching of the edge uncoated region of the cathode current collector is cancelled before cold pressing. Instead, the cathode tab connection sheet is welded to the edge uncoated region of the cathode current collector (that is, the second part of the cathode current collector). Moreover, the step roller is cancelled during the cold pressing process. All other parameters remain the same. Additionally, compared to Comparative Example 1, in Examples 1 to 18, during preparation of the cathode electrode plate, the stretching of the edge uncoated region of the cathode current collector is cancelled before cold pressing. Instead, the cathode tab connection sheet is welded to the edge uncoated region of the cathode current collector (that is, the second part of the cathode current collector), and the step roller is cancelled during the cold pressing process. All other parameters remain the same. In Comparative Example 2, because the area ratio of the weld mark to the welding region and the length ratio of the welding region to the overlap region, the experimental data cannot be measured.

The relevant data of the cathode electrode plates of Comparative examples 1 to 2 and Examples 1 to 16 of the electrochemical apparatus are shown in Table 1 below:

**Table 1**

| Number | d2 (mm) | d4 (mm) | d1 (mm) | d6 (mm) | d5 (mm) | d8 (mm) | Welding tensile force F (N) | Tab folding proportion | Wrinkle after cold pressing |
|---|---|---|---|---|---|---|---|---|---|
| Comparative example 1 | \ | \ | \ | \ | \ | \ | \ | 2.50% | ** |
| Comparative example 2 | 5 | 2 | 10 | 0 | 0.05 | 5 | 5 | Cannot measure | Cannot measure |
| Example 1 | 5 | 2 | 10 | 0 | 3 | 5 | 414 | 0 | \ |
| Example 2 | 1 | 2 | 10 | 0 | 3 | 5 | 400 | 0.01% | \ |
| Example 3 | 10 | 2 | 10 | 0 | 3 | 5 | 412 | 0.05% | \ |
| Example 4 | 20 | 2 | 10 | 0 | 3 | 5 | 397 | 0.02% | * |
| Example 5 | 5 | -2 | 10 | 0 | 3 | 5 | 381 | 0.01% | \ |
| Example 6 | 5 | 5 | 10 | 0 | 3 | 5 | 420 | 0.02% | \ |
| Example 7 | 5 | 10 | 10 | 0 | 3 | 5 | 444 | 0.05% | \ |
| Example 8 | 5 | 2 | 5 | 0 | 3 | 5 | 408 | 0 | \ |
| Example 9 | 5 | 2 | 25 | 0 | 3 | 5 | 407 | 0.40% | \ |
| Example 10 | 5 | 2 | 10 | -3 | 3 | 5 | 433 | 0 | \ |
| Example 11 | 5 | 2 | 10 | 5 | 3 | 5 | 399 | 0.01% | \ |
| Example 12 | 5 | 2 | 10 | 20 | 3 | 5 | 433 | 0.50% | \ |
| Example 13 | 5 | 2 | 10 | 0 | 0.2 | 5 | 70 | 0.50% | \ |
| Example 14 | 5 | 2 | 10 | 0 | 8 | 5 | 890 | 0 | \ |
| Example 15 | 5 | 2 | 10 | 0 | 3 | 0 | 423 | 0 | \ |
| Example 16 | 5 | 2 | 10 | 0 | 3 | 10 | 390 | 0.01% | \ |
| Example 17 | 5 | -8 | 10 | 0 | 3 | 5 | 392 | 0.05% | \ |
| Example 18 | 5 | 2 | 10 | -5 | 3 | 5 | 450 | 0 | \ |

It should be noted that in Table 1, for ease of query, in the column d4, a negative number indicates a case that the first side of the cathode tab connection sheet 51 is located on the insulating layer 13 (for example, d4 being -2 mm in Table 1 means d4 = 2 mm when the first side of the cathode tab connection sheet 51 is located on the insulating layer 13), while a positive number indicates a case that the first side of the cathode tab connection sheet 51 is located on the second part 112 of the cathode current collector (for example, d4 being 2 mm in Table 1 means d4 = 2 mm when the first side of the cathode tab connection sheet 51 is located on the second part 112 of the cathode current collector). In the column d6, a negative number indicates a case that the first side of the first weld mark 61 is located on the second part 112 of the cathode current collector (for example, d6 being -3 mm in Table 1 means d6 = 3 mm when the first side of the first weld mark 61 is located on the second part 112 of the cathode current collector), while a positive number indicates a case that the first side of the first weld mark 61 is located on the cathode tab connection sheet 51 (for example, d6 being 20 mm in Table 1 means d6 = 20 mm when the first side of the first weld mark 61 is located on the cathode tab connection sheet 51). Additionally, in Table 1, "\" means "none", and the number of "★" signs means the severity of wrinkling: a larger number of "*" signs means a higher severity of the wrinkling. Additionally, for Example 1 to Example 18, the tab folding proportion can refer to the folding proportion of the cathode tab connection sheet 51 and the second part 112 of the cathode current collector (which can be understood with reference to FIGs. 3A, 3B, 4A, 4B, and 4C); for Comparative example 1 and Comparative example 2, the tab folding proportion can refer to the folding proportion of the edge uncoated region 14' (which can be understood with reference to FIG. 2).

From analysis of the data shown in Table 1, it can be seen that the electrochemical apparatus 10 in the examples of this application (that is, Examples 1 to 18) significantly improves the wrinkling of the cathode electrode plate 1 after cold pressing, and also significantly improves the tab folding, as compared to the electrochemical apparatus in the related technology. Therefore, using such cathode electrode plate 1 for manufacturing the electrochemical apparatus 10 can effectively improve the manufacturing yield of the electrochemical apparatus 10.

The term "include" and its variants used herein are open terms, meaning "including but not limited to". The term "based on" means "at least partially based on". The term "one embodiment" means "at least one embodiment"; the term "another embodiment" means "at least one other embodiment"; and the term "some embodiments" means "at least some embodiments". Other terms will be defined in the descriptions. It should be noted that the terms "first", "second", and so on are merely used to distinguish between different apparatuses, modules, or units, and are not intended to limit the sequence or interdependence of the functions performed by these apparatuses, modules, or units.

It should be noted that the modifiers "one" and "multiple" in this application is illustrative rather than restrictive, and those skilled in the art should understand that unless otherwise clearly stated in the context, they should be understood as "one or more".

Those skilled in the art will readily conceive other embodiments of this application upon consideration of the specification and practice of the invention disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and embodiments are merely considered as illustrative, and the actual scope and spirit of this application are indicated by the appended claims.

## Claims

1. An electrochemical apparatus, comprising: an electrode plate, wherein the electrode plate comprises a current collector, an active material layer, and a tab connection sheet, and when the electrode plate is in an unfolded state, the current collector comprises a first part and a second part in a width direction of the electrode plate, the active material layer is disposed on a surface of the first part, the second part is an uncoated foil region on which the active material layer is not disposed, the tab connection sheet overlaps with a surface of the second part to form an overlap region, and the tab connection sheet is welded to the surface of the second part to form an electrical connection to the second part, wherein in a length direction of the electrode plate, an area ratio of a weld mark to a welding region is greater than or equal to 20%, and a length ratio of the welding region to the overlap region is greater than or equal to 60%.

2. The electrochemical apparatus according to claim 1, wherein the electrode plate is a cathode electrode plate, the first part comprises a first subpart and a second subpart that are connected, the second subpart is connected to the second part, the active material layer is disposed on the first subpart, and an insulating layer is disposed on the second subpart; and
in the width direction of the electrode plate, the second part comprises a first side close to the first subpart and a second side far from the first subpart, and the tab connection sheet comprises a first side close to the first subpart and a second side far from the first subpart;
wherein a spacing exists between the tab connection sheet and the first subpart, and the second side of the second part is located between the first side and the second side of the tab connection sheet.

3. The electrochemical apparatus according to claim 2, wherein in the width direction of the electrode plate, a width d1 of the tab connection sheet satisfies: 3 mm ≤ d1 ≤ 25 mm.

4. The electrochemical apparatus according to claim 2, wherein in the width direction of the electrode plate, a width d2 of the second part satisfies: 1 mm ≤ d2 ≤ 20 mm.

5. The electrochemical apparatus according to claim 2, wherein in the width direction of the electrode plate, a width d3 of the insulating layer satisfies: 0.5 mm ≤ d3 ≤ 5 mm.

6. The electrochemical apparatus according to claim 2, wherein in the width direction of the electrode plate, the insulating layer comprises a first side close to the first subpart and a second side far from the first subpart; and
under a condition that the first side of the tab connection sheet is located on the insulating layer, a spacing d4 between the first side of the tab connection sheet and the second side of the insulating layer satisfies: 0 mm ≤ d4 ≤ 8 mm;
or,
under a condition that the first side of the tab connection sheet is located on the second part, a spacing d4 between the first side of the tab connection sheet and the second side of the insulating layer satisfies: 0 mm ≤ d4 ≤ 10 mm.

7. The electrochemical apparatus according to claim 2, wherein the weld mark comprises a first weld mark, the first weld mark is formed when the second part and the tab connection sheet are welded;
in the width direction of the electrode plate, the first weld mark comprises a first side close to the first subpart and a second side far from the first subpart; and
the second side of the first weld mark is located on the tab connection sheet, and a spacing exists between the first weld mark and the first subpart.

8. The electrochemical apparatus according to claim 7, wherein in the width direction of the electrode plate, the width d5 of the first weld mark satisfies: 0.1mm ≤ d5 ≤ 10mm.

9. The electrochemical apparatus according to claim 7, wherein under a condition that the first side of the first weld mark is located on the second part, a spacing d6 between the first side of the first weld mark and the first side of the tab connection sheet satisfies: 0 mm ≤ d6 ≤ 5 mm;
or,
under a condition that the first side of the first weld mark is located on the tab connection sheet, a spacing d6 between the first side of the first weld mark and the first side of the tab connection sheet satisfies: 0 mm ≤ d6 ≤ 20 mm.

10. The electrochemical apparatus according to claim 7, wherein under a condition that a first projection of the second side of the first weld mark on the tab connection sheet overlaps with a second projection of the second part on the tab connection sheet, a spacing d7 between the second side of the first weld mark and the second side of the second part satisfies: 0 mm ≤ d7 ≤ 15 mm;
or,
under a condition that a first projection of the second side of the first weld mark on the tab connection sheet does not overlap with a second projection of the second part of the electrode plate on the tab connection sheet, a spacing d7 between the second side of the first weld mark and the second side of the second part satisfies: 0 mm ≤ d7 ≤ 7 mm.

11. The electrochemical apparatus according to claim 7, wherein the electrochemical apparatus further comprises a tab, the tab is welded to the tab connection sheet to form an electrical connection, and a second weld mark is formed on the tab connection sheet; and
in the width direction of the electrode plate, the second weld mark comprises a first side close to the first subpart and a second side far from the first subpart;
wherein a spacing d8 between the second side of the first weld mark and the first side of the second weld mark satisfies: 0 mm < d8 ≤ 10 mm.

12. The electrochemical apparatus according to claim 1, wherein a welding tensile force between the second part and the tab connection sheet is greater than or equal to 70N and less than or equal to 1000N.

13. An electric device, comprising the electrochemical apparatus according to any one of claims 1 to 12.
